# EUROPEAN PATENT APPLICATION

(11) **EP 1 890 244 A2**
(43) Date of publication of application: **20.02.2008**
(21) Application number: 07252851.6
(22) Date of filing: 18.07.2007
(51) Int. Cl.: G06F 17/30, G06F 21/00

(54) **Scanned document management system**

(30) Priority: 27.07.2006 JP 2006204911; 27.07.2006 JP 2006204912; 27.07.2006 JP 2006204913; 28.06.2007 JP 2007170859; 28.06.2007 JP 2007170860; 28.06.2007 JP 2007170861
(71) Applicant: Ricoh Company, Ltd., Tokyo 143-8555 (JP)
(72) Inventor: Kawada, Jun, Kawasaki-shi, Kanagawa (JP)
(74) Representative: Leeming, John Gerard

(57) **Abstract**

For registering in a file server an image file obtained from scanning a document with an image processing apparatus, under the control of a business system which carries out management of business forms or such for specific business, meta information including information is generated at least based on information obtained from the business system, with which the document to scan can be identified in a case of search carried out afterward, and not affected by implementation of the business system and the file server. In the file server, the meta information is registered with correspondence to an image file of the scanned document, and, based on the meta information, the corresponding image file of the document registered in the file server is submitted in response to a search request given by a terminal other than the business system.

## Description

The present invention relates to a scanned document management method in a scanned document management system in which an image processing apparatus such as an MFP (Multi Function Printer), a business system and a file server are associated together, for improving browsability of the file server, for improving access right control of the file server and security, and also, for improving flexibility for expanding or replacement of equipment of the system or such.

Recently, although handling of documents in an electronic form has been progressed in, in an office, still many documents are obtained or created in a paper form. That is, there are documents which are printed out, handwritten contents are added thereto, handwritten documents, and so forth. In order to collectively managing these documents, such a technology has drawn attention that scanning of documents are carried out by means of a scanning function of an MFP, electronic image data is thus obtained, and after that, the documents in the electronic form are stored in a file server.

Further, documents to manage include those having close relationship with business contents, such as estimation sheets, order sheets or such, and thus, these documents are handled together with a business system which manages such business forms used in specific businesses, in general. It is noted that, in many cases, the business system is provided in a form of an ASP (Application Service Provider).

Such a scanned document management system is generally classified into two types, i.e., MFP scanning and ASP scanning. The MFP scanning is such that, an extended function (such as an extension of JavaScript or such) of a business system is called from an operation panel of an MFP or from a PC (Personal Computer), a cover page in which information of a transmission destination of a scanned document (registration destination) and so forth are embedded is printed out, the MFP scans the target document together with the cover sheet, and a file server registers the scanned document according to the information embedded in the cover sheet. The ASP scanning is such that an extended function of a business system is called from an operation panel of an MFP, a target document is scanned, and the scanned document is directly registered in a file server in an electronic form.

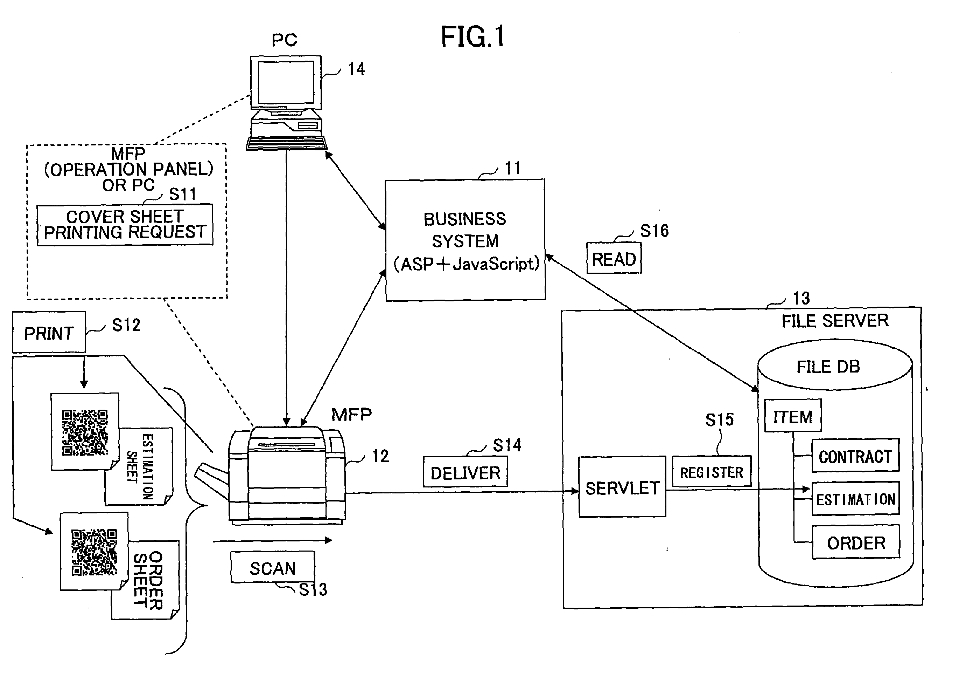

FIG. 1 shows a general configuration of the MFP scanning in a business management system in the

### related art.

In FIG. 1, by means of an extended function of a business system 11 called from an operation panel of an MFP 12 or a PC 14, a cover sheet printing request is made (Step S11), and thus, the MFP 12 prints out a cover sheet (Step S12).

Next, the MFP 12 scans a target document together with the cover sheet in a manner in which they are put on one another (Step S13), and the thus-obtained scanned images in an electronic form are delivered to a file server 13 (Step S14).

The file server 13 obtains information embedded in the cover sheet by means of Servlet, and registers the target document according to the thus-obtained information, in a file DB (Step S15).

Further, it is possible to read documents thus stored in the file server by means of the business system 11 from the operation panel of the MFP or from the PC 14 (Step S16).

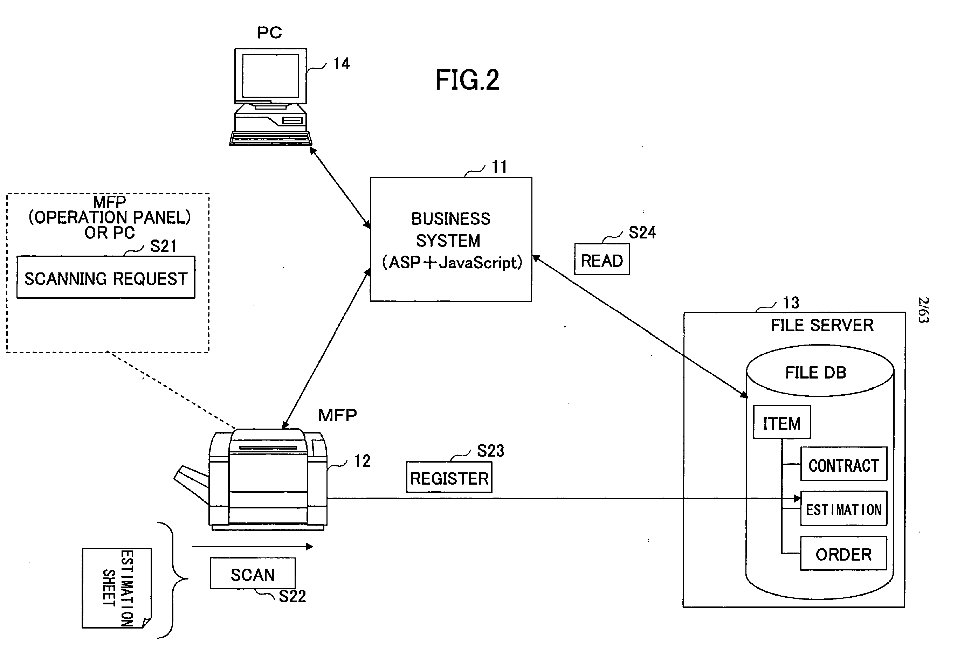

FIG. 2 shows a general configuration of the ASP scanning in a scanned document management system in the prior art.

In FIG. 2, a scanning request is made by means of an extended function of a business system 1 from an operation panel of an MFP 12 (Step S21), a target document is scanned by the MFP 12 (Step S22), and the thus-obtained scanned document in an electronic from is registered in a file DB of a file server 13 (Step S23) .

Further, it is possible to read thus-stored documents in the electronic form, by means of the business system 11 from the operation panel of the MFP 12 or from the PC 14 (Step S24).

Although such a scanned management system in which an MFP, a business system and a file server are associated together have drawn attention as mentioned above, the business system and the file server are connected closely, and also, a directory (folder) structure of the file server depends from specifications of the business system. As a result, browsability for when the file server is directly read from a PC or another business system may not be satisfactory. That is, in the business system, a directory having a business name such as 'estimation sheet' or such is provided under a directory of an item ID made of a numeric string for example, and a stored document is identified by a file path such as '¥¥fileserver¥1234¥estimation' or such. As a result, while there does not occurs a problem when the stored document in the file server is read from a viewer or such provided by the corresponding business system, such an item ID is seen merely as a meaningless numeric string when the file server is viewed directly from a PC or another business system. Thus, it may be difficult to find out a desired stored document in the latter case. For example, when a 'contract document' used for a certain arbitrary item is searched for, and the contract document used in a sales management system is to be read from a contract management system or such (i.e., another business system), such a problem may occur.

Further, since a directory structure of a file sever depends from specifications of a business system as mentioned above, the file server may have to be re-constructed when the business system is replaced by a service to be provided by another vendor, required along with business expansion or reconsideration. Thus, the flexibility may not be sufficient.

The present invention has been devised in consideration of these problems, and an object of the present invention is to provide a scanned document management method by which, in a scanned document management system in which an image processing apparatus, a business system and a file server are associated together, browsability of the file system can be improved.

In order to solve the problems, according to the present invention, a scanned document management method for registering in a file server an image file obtained from scanning a document with an image processing apparatus, under the control of a business system which carries out management of business forms or such for specific business, includes the steps of generating, at least based on information obtained from the business system, meta information including information, with which the document to scan can be identified in a case of a search carried out afterward, and which is not affected by implementation of the business system and the file server; registering, in the file server, the meta information with correspondence to an image file of the scanned document; and submitting, based on the meta information, the corresponding image file of the document, registered in the file server, in response to a search request given by a terminal other than the business system.

In the scanned document management system according to the present invention, since correspondence between document management in the business system and documents in the file server is provided by a link provided by the meta information, it is possible to manage the documents in the file server separate from the specifications of the business system, and thus, it is possible to improve browsability in the file server in the document management system in which the image processing apparatus, the business system and the file server are associated together.

Further, in a document management system in which an MFP, a business system and a file server are associated together, specifications of access right control may be different between the business system and the file server, and thus, it may be difficult to provide compatibility therebetween. As a result, in order to smoothly achieve registration of a file in the file system from the business system, a common user right should be given to the business system with which the file server can be freely accessed. In this case, any user who has once logged in, in the business system can operate any file of another user in the file server via the business system. As a result, there may occur a problem in a security viewpoint.

On one hand, function extension of the business system such as that for registration of an image in the file server or such may be carried out with the use of JavaScript or such. In this case, a user name and a password of the common user are coded by JavaScript or such. As a result, the user name and the password can be seen as a result of a source code shown on a page of the business system being seen. Thus, it is difficult to conceal the account of the common user, and thus, there may occur a problem in a security viewpoint. Further, the source code shown on the page may have to be also changed when the password is changed periodically, there are many contents to be changed as a result, and, thus, the necessary operation may become troublesome in such a case.

The present invention has been devised also in consideration of these problems, and another object of the present invention is to provide a scanned document management method in an scanned document management system in which an image processing apparatus, a business system and a file server are associated together, access right control for the file server is improved, and also, security is improved.

For this purpose, according to another aspect of the present invention, a scanned document management method for registering in a file server an image file obtained from scanning a document with an image processing apparatus, under the control of a business system which carries out management of business forms or such for specific business, includes the steps of generating meta information including information for identifying, in a case of a search carried out afterward, the image file of the document, as well as control information describing an access condition for accessing the document; carrying out access right checking operation based on the access control information of the meta information when registering, in the file server, the meta information with correspondence to an image file of the scanned document; and submitting, in response to a search request for the image file of the document, the corresponding image file registered in the file server, after carrying out access right checking operation based on the access control information of the meta information.

In this scanned document management method, since access control is carried out based on access control information included in meta information corresponding to a document in a file server, it is possible to improve access right control and also, it is possible to improve security in a scanned document management system in which an image processing apparatus, a business system and the file server are associated together.

Furthermore, in a scanned document management system in which an MFP, a business system and a file server are associated together, since the system is configured in such a manner that the respective elements thereof are strongly aware of each other, and thus, it may not be sufficient flexible for when equipment of the MFP or the file server is extended or replaced by those of another manufacturer, the business system is switched into a service provided by another vendor, or so. That is, since URI (Uniform Resource Identifiers) of mutual transmission destinations are directly set, or, protocols used for communication thereamong are fixed, a drastic change may be required for a case where the members of the system are to be increased or changed.

The present invention has been devised also in consideration of the problem, and further another object of the present invention is to provide a scanned document management method in a scanned document management system in which an image processing apparatus, a business system and a file server are associated together, flexibility is improved for a case where equipment is extended, replaced or such.

For this purpose, according to further another aspect of the present invention, a scanned document management method for registering in a file server an image file obtained from scanning a document with an image processing apparatus, under the control of a business system which carries out management of business forms or such for specific business, includes the steps of managing, in a service information DB, information of available image processing apparatus, business system and file server; and responding to a request from the business system or the image processing apparatus to provide information required for accessing them.

In the scanned document management method according to the present invention, since necessary information for associating an image processing apparatus, a business system and a file server with each other is obtained with the use of a registry service in a scanned document management system in which the image processing apparatus, the business system and the file server are associated together, it is possible to moderately weaken a mutual relationship thereamong. As a result, it is possible to improve flexibility for when equipment is extended, replaced or so.

### BRIEF DESCRIPTION OF DRAWINGS

Other objects and further features of the present invention will become more apparent from the following detailed description when read in conjunction with the accompanying drawings:
FIG. 1 shows a general configuration of MFP scanning in a scanned document management system in the related art;
FIG. 2 shows a general configuration of ASP scanning in a scanned document management system in the related art;
FIG. 3 shows a class diagram for cover sheet printing or original modification in a first embodiment applying the present invention to MFP scanning;
FIG. 4 shows a class diagram for MFP scanning in the first embodiment;
FIG. 5 shows a component diagram concerning the first embodiment;
FIG. 6 shows an example of meta information describing by XML;
FIG. 7 shows a general configuration of processing of cover sheet printing and so forth, and MFP scanning;
FIG. 8 shows a sequence diagram showing an example of cover sheet printing and so forth in detail;
FIGS. 9A and 9B show a sequence diagram showing an example of processing of MFP scanning in detail;
FIG. 10 shows a specific example of arrangement of a functional part of MFP scanning;
FIG. 11 shows a component arrangement;
FIG. 12 shows a specific example of arrangement of functional parts of MFP scanning;
FIG. 13 shows a component arrangement;
FIG. 14 shows a specific example of an arrangement of the functional parts of MFP scanning;
FIG. 15 shows a component arrangement;
FIG. 16 shows a class diagram in a second embodiment applying the present invention to ASP scanning;
FIG. 17 shows a component diagram concerning the second embodiment;
FIG. 18 shows a general configuration of processing of ASP scanning;
FIGS. 19A and 19B show a sequence diagram showing an example of processing of ASP scanning in detail;
FIG. 20 shows a specific example of an arrangement of functional parts of ASP scanning;
FIG. 21 shows a component arrangement;
FIG. 22 shows a class diagram for a search in common for MFP scanning and ASP scanning;
FIG. 23 shows a component diagram for a search in common for MFP scanning and ASP scanning;
FIG. 24 shows a general configuration of processing of a search;
FIG. 25 shows a sequence diagram of a specific example of a search in detail;
FIG. 26 shows a specific example of an arrangement of functional parts for a search in common for MFP scanning and ASP scanning;
FIG. 27 shows a component arrangement;
FIG. 28 shows a class diagram for cover sheet printing or original modification in a third embodiment applying the present invention to MFP scanning;
FIG. 29 shows a class diagram for MFP scanning in the third embodiment;
FIG. 30 shows a component diagram concerning the third embodiment;
FIG. 31 shows an example of meta information described in XML;
FIG. 32 shows an example of access right information described in XACML;
FIG. 33 shows a general configuration of processing of cover sheet printing and so forth, and MFP scanning;
FIG. 34 shows a sequence diagram showing an example of cover sheet printing and so forth in detail;
FIGS. 35A and 35B show a sequence diagram showing an example of processing of MFP scanning in detail;
FIG. 36 shows a specific example of an arrangement of functional parts of MFP scanning;
FIG. 37 shows a component arrangement;
FIG. 38 shows a specific example of an arrangement of functional parts of MFP scanning;
FIG. 39 shows a component arrangement;
FIG. 40 shows a specific example of an arrangement of functional parts of MFP scanning;
FIG. 41 shows a component arrangement;
FIG. 42 shows a class diagram in a fourth embodiment applying the present invention to ASP scanning;
FIG. 43 shows a component diagram concerning the fourth embodiment;
FIG. 44 shows a general configuration of processing of ASP scanning;
FIGS. 45A and 45B show a sequence diagram showing an example of processing of ASP scanning in detail;
FIG. 46 shows a specific example of an arrangement of functional parts of ASP scanning;
FIG. 47 shows a component arrangement;
FIG. 48 shows a class diagram for a search in common for MFP scanning and ASP scanning;
FIG. 49 shows a component diagram for a search in common for MFP scanning and ASP scanning;
FIG. 50 shows a general configuration of processing of a search;
FIG. 51 shows a sequence diagram of a specific example of a search in detail;
FIG. 52 shows a specific example of an arrangement of functional parts for a search in common for MFP scanning and ASP scanning;
FIG. 53 shows a component arrangement;
FIG. 54 shows a class diagram concerning a fifth embodiment of the present invention;
FIG. 55 shows a component diagram concerning the fifth embodiment of the present invention;
FIG. 56 shows an example of a service information DB;
FIG. 57 shows a general configuration of processing of the fifth embodiment;
FIG. 58 shows a sequence diagram showing processing of the fifth embodiment in detail;
FIG. 59 shows a specific example of an arrangement of functional parts; and
FIG. 60 shows a component arrangement.

### DETAILED DESCRIPTION OF THE PREFERRED EMBODIMENTS

According to an embodiment of the present invention, a scanned document management method for registering in a file server an image file obtained from scanning a document with an image processing apparatus, under the control of a business system which carries out management of business forms or such for specific business, includes generating, at least based on information obtained from the business system, meta information including information, with which the document to scan can be identified in a case of a search carried out afterward, and which is not affected by implementation of the business system and the file server; registering, in the file server, the meta information with correspondence to an image file of the scanned document; and submitting, based on the meta information, the corresponding image file of the document, registered in the file server, in response to a search request given by a terminal other than the business system.

In the scanned document management method, the business system may generate, before executing scanning, a cover sheet which is paper in which the meta information is embedded, and is scanned together with the document.

In the scanned document management method, the business system may carry out a modification such as to embed the meta information in a case of printing out the document to be scanned.

In the scanned document management method, a terminal which is connected with the business system may carry out a modification such as to embed the meta information in a case of printing out the document to be scanned.

In the scanned document management method, the business system may generate, in a case of scanning the document with the image processing apparatus, the meta information, which is transmitted together with an image file of the document.

In the scanned document management method, authentication information required when accessing the file server may be included in the meta information.

According to another embodiment of the present invention, a scanned document management system for registering in a file server an image file obtained from scanning a document with an image processing apparatus, under the control of a business system which carries out management of business forms or such for specific business, includes a meta information generating part configured to generate, at least based on information obtained from the business system, meta information including information, with which the document to scan can be identified afterward, and which is not affected by implementation of the business system and the file server; a meta information registering part configured to register, in the file server, the meta information with correspondence to an image file of the scanned document; and
a file search part configured to submit, based on the meta information, the corresponding image file of the document, registered in the file server, in response to a search request given by a terminal other than the business system.

In the scanned document management system, the business system may include a part configured to generate, before executing the scanning, a cover sheet which is paper in which the meta information is embedded, and is scanned together with the document.

In the scanned document management system, the business system may include a part configured to carry out a modification such as to embed the meta information in a case of printing out the document to be scanned.

In the scanned document management system, a terminal which is connected with the business system may include a part configured to carry out a modification such as to embed the meta information in a case of printing out the document to be scanned.

In scanned document management system, the business system may include a part configured to generate, in a case of scanning the document with the image processing apparatus, the meta information, which is transmitted together with the image file.

In the scanned document management system, the business system may include authentication information required when accessing the file server, in the meta information.

According to another embodiment of the present invention, a scanned document management method for registering in a file server an image file obtained from scanning a document with an image processing apparatus, under the control of a business system which carries out management of business forms or such for specific business, includes generating meta information including information for identifying, in a case of a search carried out afterward, the image file of the document, as well as control information describing an access condition for accessing the document; carrying out access right checking operation based on the access control information of the meta information when registering, in the file server, the meta information with correspondence to an image file of the scanned document; and submitting, in response to a search request for the image file of the document, the corresponding image file registered in the file server, after carrying out access right checking operation based on the access control information of the meta information.

In the scanned document management method, the business system may generate, before executing scanning, a cover sheet which is paper in which the meta information is embedded, and is scanned together with the document.

In the scanned document management method, the business system may carry out a modification such as to embed the meta information in a case of printing out the document to be scanned.

In the scanned document management method, a terminal which is connected with the business system may carry out a modification such as to embed the meta information in a case of printing out the document, to be scanned.

In the scanned document management method, the business system may generate, in a case of scanning the document with the image processing apparatus, the meta information, which is transmitted together with the image file.

In the scanned document management method, authentication information required when accessing the file server may be included in the meta information.

According to another embodiment of the present invention, a scanned document management system for registering in a file server an image file obtained from scanning a document with an image processing apparatus, under the control of a business system which carries out management of business forms or such for specific business, includes a meta information generating part configured to generate meta information including information for identifying, in a case of a search carried out afterward, the image file of the document, as well as control information describing an access condition for accessing the document; a meta information registering part configured to register, in the file server, the meta information with correspondence to an image file of the scanned document; a file search part configured to submit, in response to a search request for the image file of the document, the corresponding image file registered in the file server, based on the meta information; and an access right checking part configured to carry out, in response to the registration of the image file and the meta information and in response to the search request, access right checking operation based on the access control information of the meta information.

In the scanned document management system, the business system may include a part configured to generate, before executing the scanning, a cover sheet which is paper in which the meta information is embedded, and is scanned together with the document.

In the scanned document management system, the business system may include a part configured to carry out a modification such as to embed the meta information in a case of printing out the document to be scanned.

In the scanned document management system, a terminal which is connected with the business system may include a part configured to carry out a modification such as to embed the meta information in a case of printing out the document to be scanned.

In the scanned document management system, the business system may include a part configured to generate, in a case of scanning the document with the image processing apparatus, the meta information, which is transmitted together with the image file.

In the scanned document management system, the business system may include authentication information required when accessing the file server, in the meta information.

According to another embodiment of the present invention, a scanned document management method for registering in a file server an image file obtained from scanning a document with an image processing apparatus, under the control of a business system which carries out management of business forms or such for specific business, includes managing, in a service information DB, information of available image processing apparatus, business system and file server; and responding to a request from the business system or the image processing apparatus to provide information required for accessing them.

In the scanned document management method, the service information DB may manage a URL of the image processing apparatus, a URL of the business system and a URL and a protocol type of the file server, with correspondence from a user.

In the scanned document management method, the URLs of the image processing apparatuses or the URLs and the protocol types of the file servers may be provided in response to a request from the business system.

In the scanned document management method, the URL of the business system or the URL and the protocol type of the file server may be provided in response to a request from the image processing apparatus.

In the scanned document management method, the service information DB is held by a registry server.

According to another embodiment of the present invention, a scanned document management system for registering in a file server an image file obtained from scanning a document with an image processing apparatus, under the control of a business system which carries out management of business forms or such for specific business, includes a service information DB managing information of available image processing apparatus, business system and file server; and a responding part configured to respond to a request from the business system or the image processing apparatus to provide information required for accessing them.

In the scanned document management system, the service information DB may manage a URL of the image processing apparatus, a URL of the business system and a URL and a protocol type of the file server, with correspondence from a user

In the scanned document management method, the responding part may provide the URLs of the image processing apparatuses or the URLs and the protocol types of the file servers in response to a request from the business system.

In the scanned document management method, the responding part may provide the URL of the business system or the URL and the protocol type of the file server in response to a request from the image processing apparatus.

In the scanned document management method, a registry server holding the service information DB may be provided.

Next, preferred embodiments of the present invention will now be described in detail.

### <First mode for carrying out the present invention>

A first mode for carrying out the present invention (i.e., first and second embodiments of the present invention) will now be described.

A scanned document management system in any one of first and second embodiments of the present invention, described below, corresponds to the scanned document management system in the related art described above with reference to FIGS. 1 and 2, includes a business system 1, an MFP 2, a file server 3 and a PC 4, corresponding to the business system 11, the MFP 12, the file server 13 and the PC 14, shown in FIGS. 1 and 2, respectively, and includes improvements described below.

### <MFP scanning>

A scanned document management method according to a first embodiment of the present invention will now be described. In the scanned document management method according to the first embodiment, the present invention is applied for MFP scanning described above.

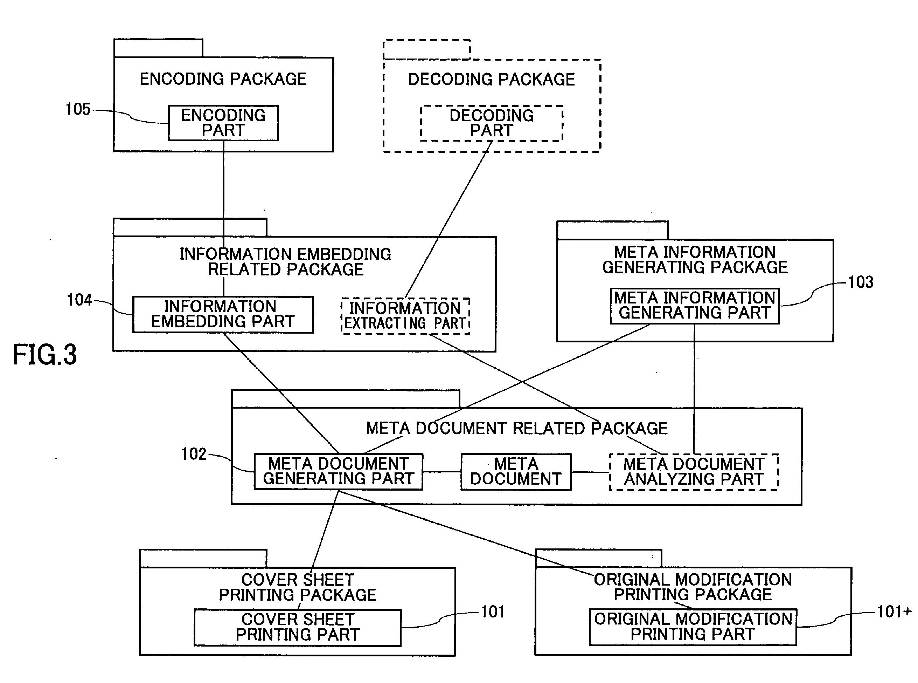

FIG. 3 shows a class diagram for cover sheet printing or original modification in the first embodiment.

In FIG. 3, as components of functional parts, a cover sheet printing part 101 included in a cover sheet printing package, an original modification printing part 101+ included in an original modification printing package, a meta document generating part 102 included in a meta document related package, a meta information generating part 103 included in as meta information generating package, an information embedding part 104 included in an information embedding related package, and an encoding part 150 included in an encoding package, are provided. It is noted that when only the cover sheet printing should be included, the original modification package is not required. On the other hand, when only the original modification printing is included, the cover sheet printing package is not required.

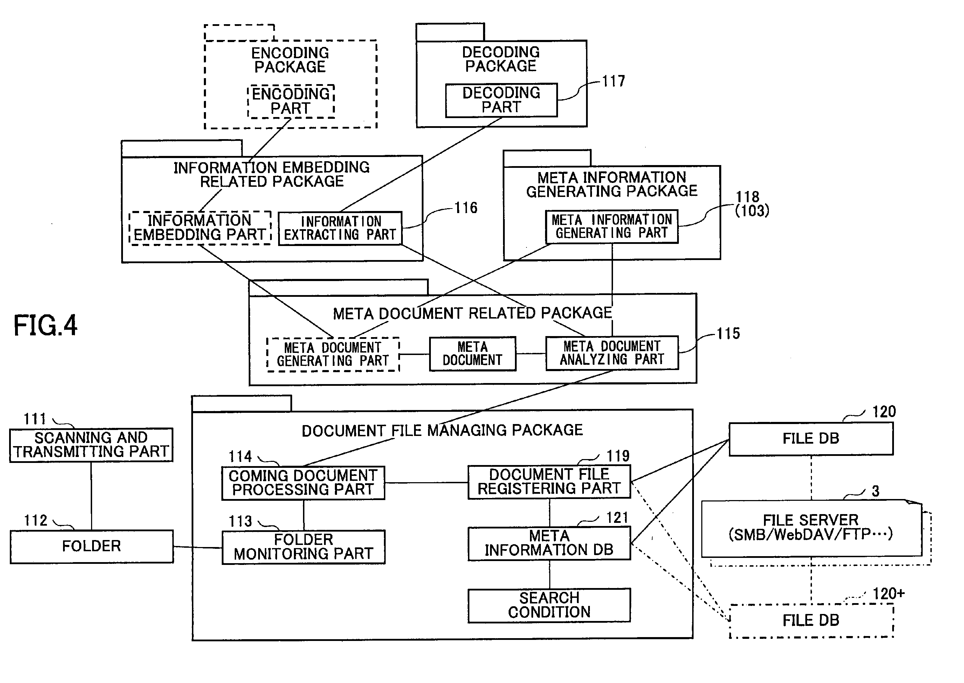

FIG. 4 shows a class diagram for MFP scanning in the first embodiment of the present invention.

In FIG. 4, as components of functional parts, a scanning and transmitting part 111 which is a function of MFP, a folder 112 which is a transmission destination of scanned documents, a folder monitoring part 113 and a coming document processing part 114 included in a document file managing package, a meta document analyzing part 115 included in the meta document related package, an information extracting part 116 included in the information embedding related package, a decoding part 117 included in a decoding package, a meta information generating part 118 included in the meta information generating package, a document file registering part 119 included in the document file managing package, a file DB 120 included in the file server 3, a meta information DB 121 of the file server 3 included in the document file managing package, are provided. Components shown by broken lines are those which are not used for MFP scanning.

It is noted that the document file registering part 119 may act as a storage manager for allocating registration destinations to a plurality of file servers. In this case, a file DB 120+ acts as another file server. As the plurality of file servers, for example, file servers operating in a LAN (Local Area Network), file servers operating in a WAN (Wide Area Network), or such (i.e., online file serves) may be used.

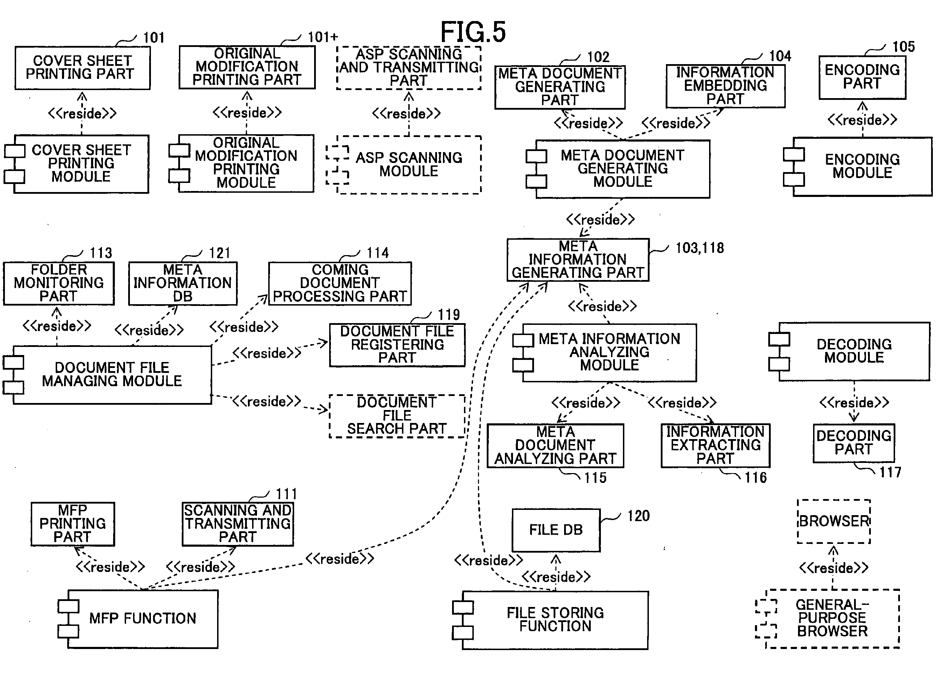

FIG. 5 shows components concerning the first embodiment of the present invention.

In FIG. 5, the cover sheet printing part belongs to a cover sheet printing module, the original modification printing part 101+ belongs to an original modification printing module, the meta document generating part 102 and the information embedding part 104 belong to a meta document generating module, the meta information generating part 103 (118) belongs to the meta document generating module, a meta document analyzing module, a MFP function and a file storing function, and the encoding part 105 beings to an encoding module. Further, the scanning and transmitting part 111 belongs to the MFP function, the folder monitoring part 113, the coming document processing part 114, the document file registering part 119 and the meta document DB 121 belong to a document file managing module, the meta document analyzing part 115 and the information extracting part 116 belong to a meta document analyzing module, the decoding part 117 belongs to a decoding module and the file DB 120 belongs to the file storing function.

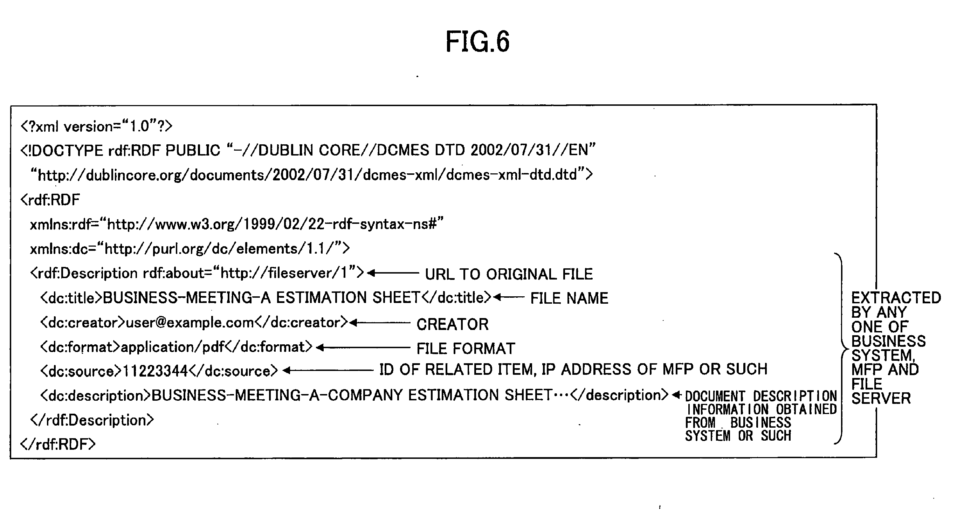

FIG. 6 shows an example of meta information described in XML (extensible Markup Language). The meta information confirms to Dublin Core (see http://dublinecore.org/documents/dces/) which is used for description of biographic information as a general vocabulary describing the meta information. In FIG. 6, in an rdf element, a description of a URI (Uniform Resource Identifiers) for an original file, a description indicating a file name, a description indicating a creator, a description indicating a file format, a description of a corresponding item ID in the business system or an IP (Internet Protocol) address or such of the MFP, and a description of a document description information obtainable from the business system, are included.

The description of the URI for the original file uses a unique URI separate from specifications of the business system provided as an ASP, such as "http://fileserver/1". As a result, it may be read directly from a general-purpose browser by means of designation of the URI. The meta information may be extracted from information obtained by means of the business system, or, also, may be extracted from information (scanning date/time, a corresponding equipment ID, a user ID, and so forth) obtainable when the MFP carries out scanning a target document, from a file server to which registration of the target document is made, or such. Further, when an online storage is used as the file server as mentioned above, a protocol name required for accessing it, authentication information required for logging in it, or such, may be included in the meta information. As the authentication information, a set of a user name and a password or such, a set of a user authentication ticket indicating that a current user is an authorized and a session ID, a folder ticket permitting accessing a specific folder or such, may be used. Further, when the number of characters of the meta information is limited, it is possible that, a corresponding storage type or such is described in the meta information, and a necessary URI, a protocol name and so forth are described in data which is linked from this storage type. It is noted that the meta information is embedded in a cover sheet or a part of an original document in a case of MFP scanning, in a form of a QR code, a tint block or such. The meta information is linked externally and is managed as an index in a case of ASP scanning.

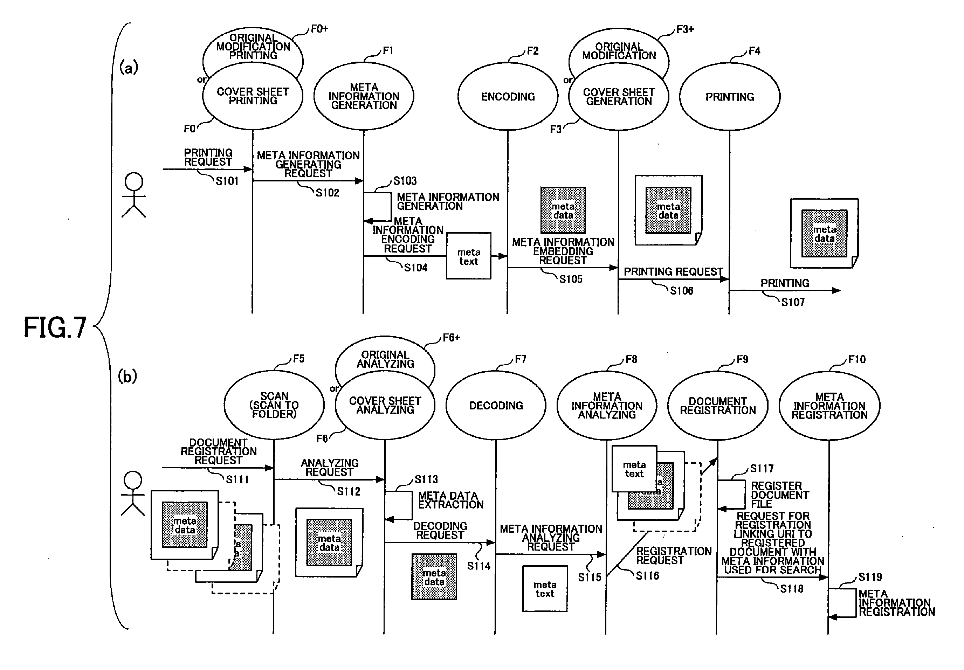

FIG. 7 shows a general configuration of processing of cover sheet printing or such and MFP scanning. FIG. 7 (a) shows a general configuration of processing of cover sheet printing or original modification printing. FIG. 7 (b) shows a general configuration of processing of MFP scanning. The processing of cover sheet printing is processing of first embedding meta information in a cover sheet, which is then used as a front page of a document in a case of scanning the document in an electronic form, and then, printing out the cover sheet. This processing is carried out simultaneously when the document is printed out so that an additional description is made to the thus-printed document by handwriting for example, or, immediately before the document is scanned, to which document an additional description has been already made by handwriting for example. The processing of original modification printing is processing of printing out a document in a state in which meta information has been previously embedded therein, so that an additional description is to be made to the thus-printed document by handwriting. In this case, it is not necessary to use a cover sheet in a case of scanning the document.

In FIG. 7 (a), when a printing request is made (Step S101) to a cover sheet printing function F0 in the case of cover sheet printing, or to an original modification printing function F0+ in the case of original modification printing, the cover sheet printing function F0 or the original modification printing function F0+ carries out a meta information generating request (Step S102) to the meta information generation function F1.

The meta information generation function F1 generates meta information (see FIG. 6) (Step S103), makes a meta information encoding request to an encoding function F2 (Step S104), and, the encoding function F2 makes a meta information embedding request to a cover sheet generation function F3 or an original modification function F3+, after encoding the meta information (Step S105).

The cover sheet generation function F3 or the original modification function F3+ then makes a printing request to a printing function F4, after generating an image data of a cover sheet or an original document with the encoded meta information embedded therein (Step S106), and the printing request F4 prints out the cover sheet or the original document (Step S107).

In FIG. 7 (b), when a document registration request is made to a scanning function (SCAN TO FOLDER) F5 (Step S111) after a target document is placed on the cover sheet which acts a front page, or, as it is in a case of the original document in which the meta information is thus previously embedded, the scanning function F5 carries out scanning thereof, and also, makes a request for analyzing the cover sheet or the original document to a cover sheet analyzing function F6 or an original analyzing function F6+ (Step S112).

The cover sheet analyzing function F6 or the original analyzing function F6+ extracts the embedded meta information from the cover sheet or from the original document, which has been scanned as mentioned above and thus, is in an electronic form as a document file, and makes a decoding request to a decoding function F7 (Step S114).

The decoding function F7 decodes the thus-extracted meta information, then makes a meta analyzing request to a meta information analyzing function F8 with the thus-decoded meta information (Step S115), and the meta information analyzing function F8 makes a registration request to a document registration function F9 with a document file and the decoded meta information (Step S116).

The document registration function F9 registers the document file, after coupling the document file with the cover sheet scanned image data in a case where the cover sheet scanned image data accompanies the document file as a result of the cover sheet being scanned together with the target document in the case of cover sheet printing, or as it is in a case where no cover sheet accompanies the document file in the case of original modification printing (Step S117), then makes a registration request with a link between a URI of the registered document file and the meta information used for a search (Step S118), to a meta information registration function F10, and the meta information registration function F10 registers the meta information (Step S119).

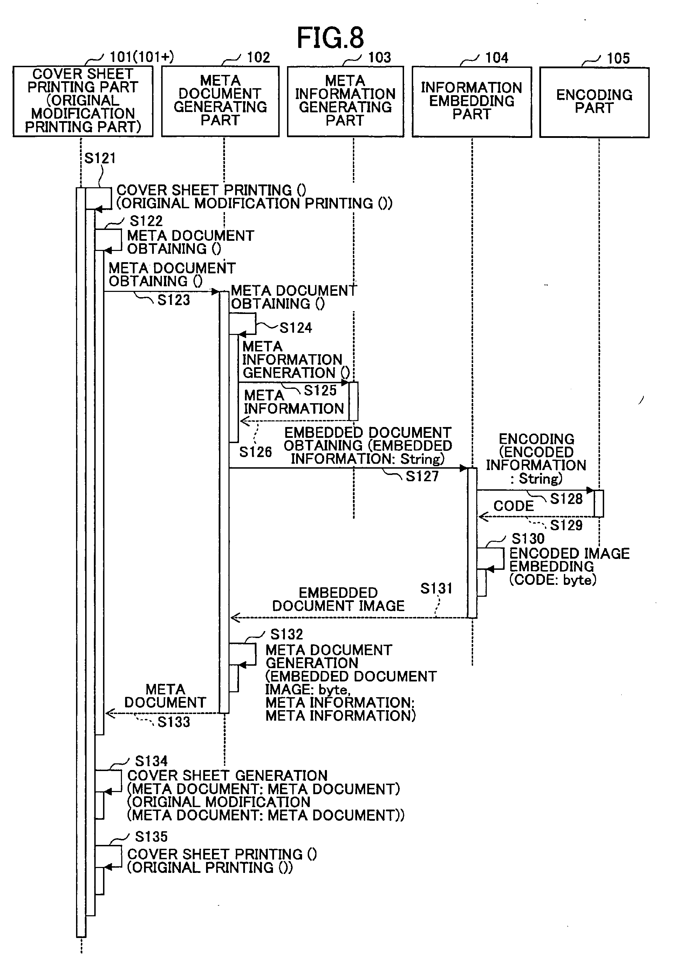

FIG. 8 shows a sequence of an example of the processing of cover sheet printing and so forth.

In FIG. 8, when starting printing out of a cover sheet or an original document (Step S121), the cover sheet printing part 101 or the original modification printing part 101+ starts obtaining a meta document (Step S122), and requests the meta document generating part 102 to obtain the meta document (Step S123).

The meta document generating part 102 starts obtaining meta information (Step S124), and requests a meta information generating part 103 to generate meta information (Step S125), and obtains the meta information generated by the meta information generating part 103 (Step S126).

Next, the meta document generating part 102 requests the information embedding part 104 to obtain an embedding document image (Step S127), the information embedding part 104 then requests the encoding part 105 to encode the meta information (Step S128), and the information embedding part 104 obtains a code thus generated by the encoding part 105 from the meta information (Step S129).

Next, the information embedding part 104 creates image data having the thus-obtained code embedded in (Step S130), and returns a thus obtained document image in which the code is thus embedded, to the meta document generating part 102 (Step S131).

Next, the meta document generating part 102 generates a meta document from the thus-obtained document image including the embedded code (Step S132), and returns it to the cover sheet printing part 101 or the original modification printing part 101+ (Step S133).

The cover sheet printing part 101 or the original modification printing part 101+ generates cover sheet image data or original document image data including the thus-obtained meta document (Step S134), and prints out the cover sheet or the original document (Step S135).

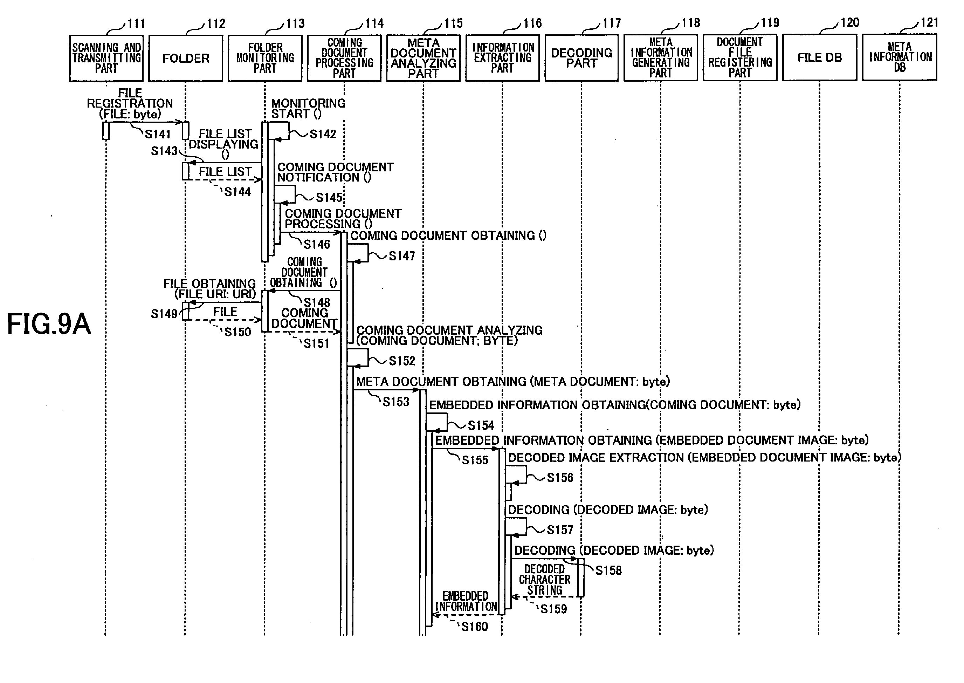

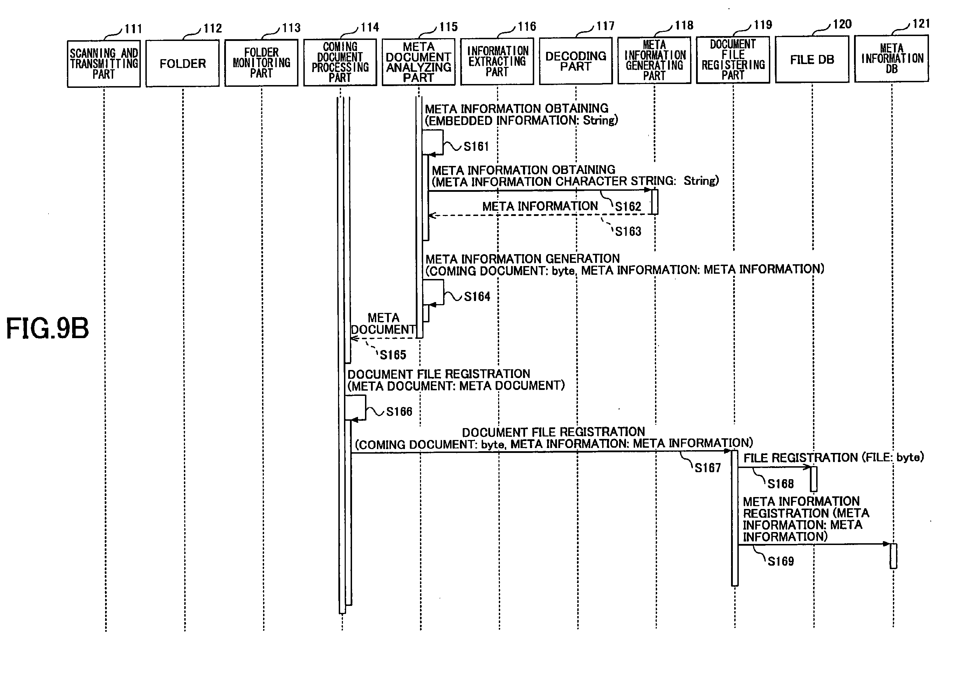

FIGS. 9A and 9B show a sequence of an example of the processing of MFP scanning in detail.

In FIGS. 9A and 9B, the scanning and transmitting part 111 carries out registration of a file obtained from scanning the cover sheet and the original document (in the case of cover sheet printing) or only the original document (in the case of original modification printing), in the folder 112 (Step S141), and, on one hand, the folder monitoring part 113 starts monitoring the folder 112 (Step S142), requests the folder 112 to display a file list (Step S143), and obtains the file list (Step S144).

Next, the folder monitoring part 113 starts document coming notification (Step S145), and requests the coming document processing part 114 to carry out document coming processing (Step S146).

The coming document processing part 114 thus starts obtaining a coming document (i.e., the cover sheet scanned image data and the original document scanned images data or only the original document scanned image registered in the folder 112 in Step S141) (Step S145), requests the folder monitoring part 113 to obtain the coming document (Step S148), the folder monitoring part 113 then requests the folder 112 to obtain a file of the coming document, the folder 112 then returns the file to the folder monitoring part 113 (Step S150), and the folder monitoring part 113 returns the file of the coming document to the coming document processing part 114 (Step S151).

Next, the coming document processing part 114 starts analyzing the coming document (Step S152), and requests the meta document analyzing part 115 to obtain a meta document (Step S153).

The meta document analyzing part 115 then starts obtaining embedded information (Step S154), and requests the information extracting part 116 to obtain the embedded information (Step S155).

The information extracting part 116 extracts an image, including a code embedded therein, from the above-mentioned coming document (Step S156), starts decoding the thus-obtained code (Step S157), requests the decoding part 117 to decode the code (Step S158), obtains a thus-obtained decoded character string from the decoding part 117 (Step S159), and returns to the meta document analyzing part 115 the decoded character string as embedded information (Step S160).

Next, the meta document analyzing part 115 starts obtaining meta information (Step S161), requests the meta information generating part 118 to obtain meta information (Step S162), and obtains the meta information from the meta information generating part 118 (Step S163). It is noted that the meta information thus obtained by the meta information generating part 118 is one obtained from the above-mentioned embedded information (i.e., the decoded character string).

Next, the meta document analyzing part 115 generates a meta document from the given meta information and the given document file (i.e., the cover sheet scanned image data and the original document scanned image data or only the original document scanned image) (Step S164), and returns the thus-obtained meta document to the coming document processing part 114 (Step S165).

Next, the coming document processing part 114 starts registration of the given document file from the mate document (Step S166), requests the document file registration part 119 to register the document file (Step S167), the document file registration part 119 registers the document file in the file DB 120 (Step S168), further the document file registration part 119 registers the given meta information from the meta document, in the meta information DB 121 (Step S169).

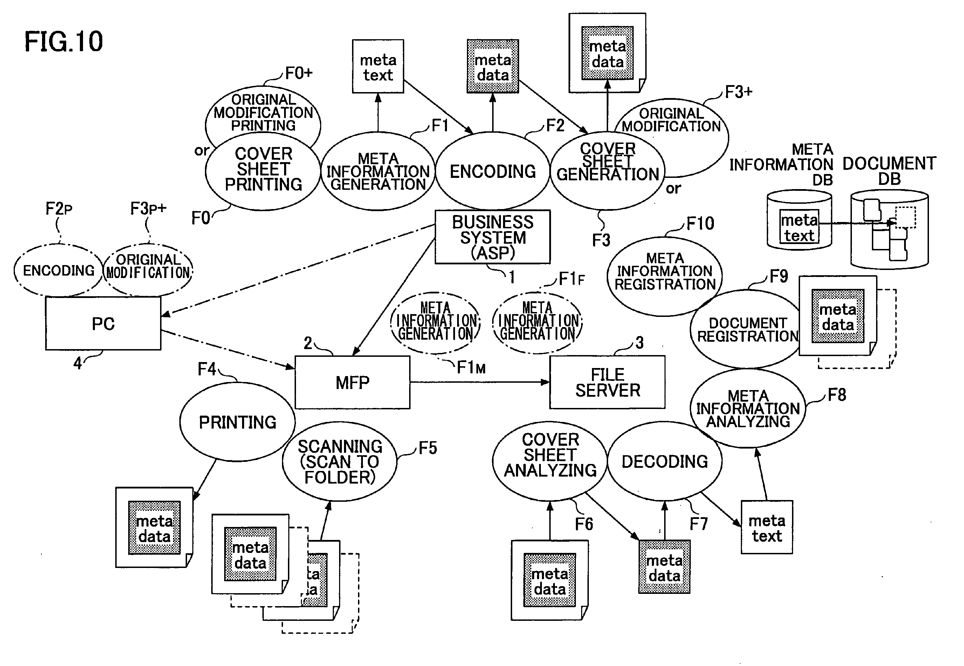

FIGS. 10-15 show specific examples of an arrangement of the functional parts and the components for MFP scanning.

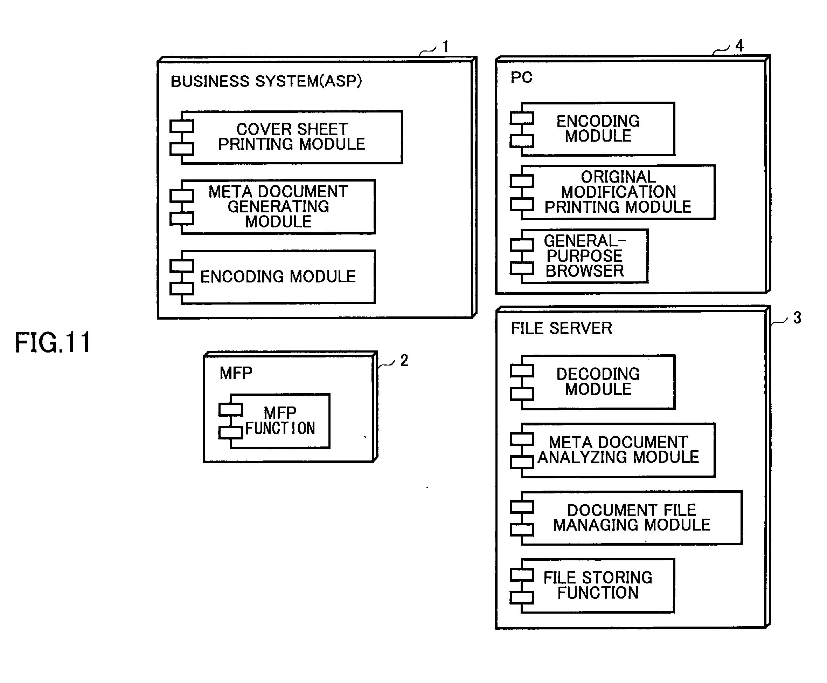

In FIG. 10, the cover sheet printing function F0 or the original modification printing function F0+, the meta information generation function F1, the encoding function F2 and the cover sheet generation function F3 or the original modification function F3+ are disposed in the business system 1, the encoding function F2_{P} and the original modification function F3_{P}+ are disposed in the PC 4. Further, the printing function F4, the scanning function F5 and the meta information generation function F1_{M} are disposed in the MFP 2. The cover sheet analyzing function F6, the decoding function F7, the meta information analyzing function F8, the document registration function F9, the meta information registration function F10 and the meta information generation function F1_{F} are disposed in the file server 3. FIG. 11 shows an arrangement of components in this case. In FIG. 11, the cover sheet printing module, the meta information generating module and the encoding module are disposed in the business system 1. The MFP function is disposed in the MFP 2. The decoding module, the meta document analyzing module, the document file managing module and the file storing function are disposed in the file server 3. The encoding module, the original modification printing module and the general-purpose browser are disposed in the PC 4.

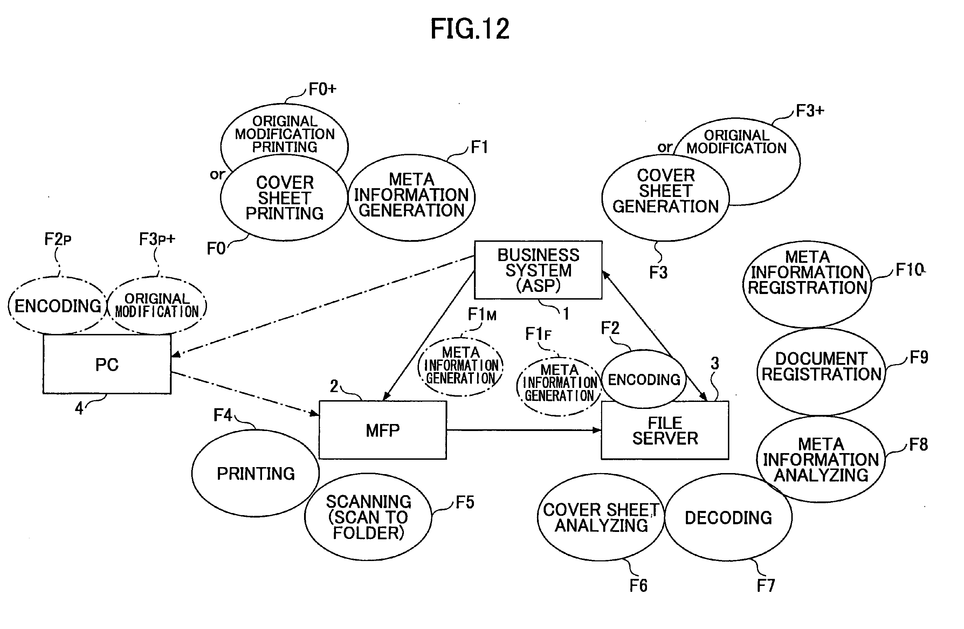

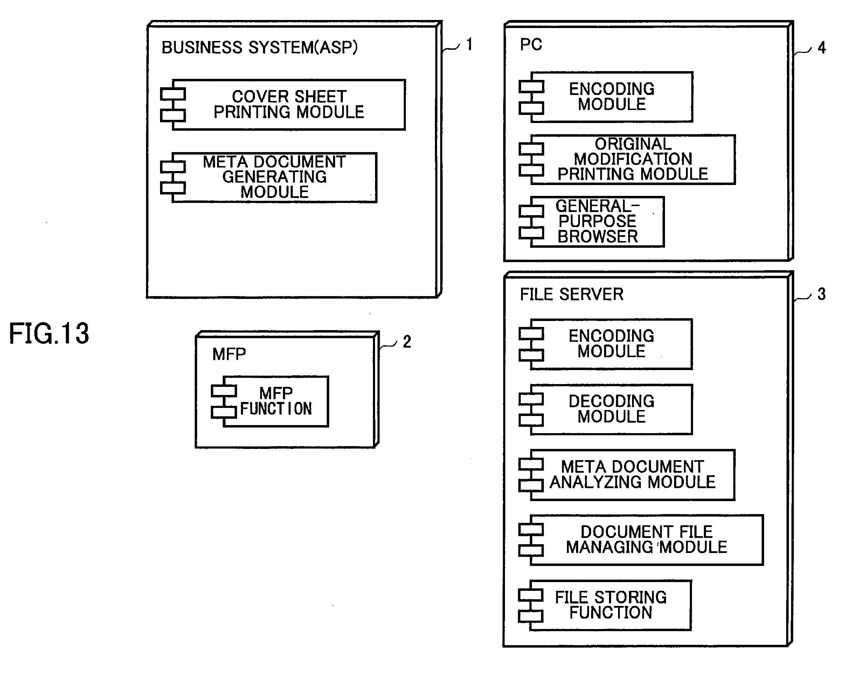

In FIG. 12, the cover sheet printing function F0 or the original modification printing function F0+, the meta information generation function F1 and the cover sheet generation function F3 or the original modification function F3+ are disposed in the business system 1. The encoding function F2p and the original modification function F3p+ are disposed in the PC 4. Further, the printing function F4, the scanning function F5 and the meta information generation function F1_{M} are disposed in the MFP 2. The encoding function F2, the cover sheet analyzing function F6, the decoding function F7, the meta information analyzing function F8, the document registration function F9, the meta information registration function F10 and the meta information generation function F1_{F} are disposed in the file server 3. FIG. 13 shows an arrangement of components in this case. In FIG. 13, the cover sheet printing module and the meta information generating module and the encoding module are disposed in the business system 1. The MFP function is disposed in the MFP 2. The encoding module, the decoding module, the meta document analyzing module, the document file managing module and the file storing function are disposed in the file server 3. The encoding module, the original modification printing module and the general-purpose browser are disposed in the PC 4.

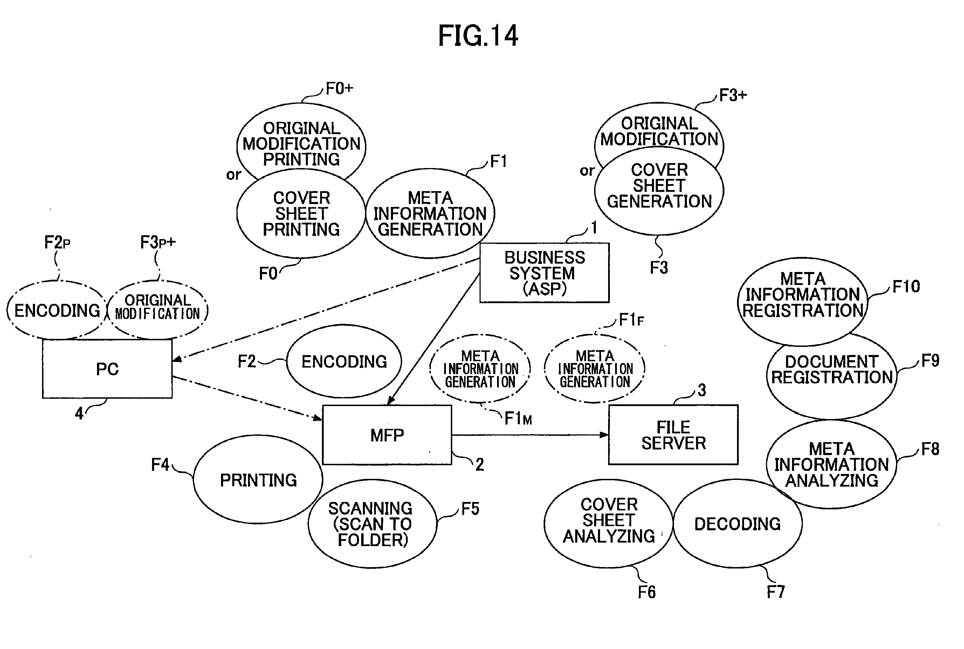

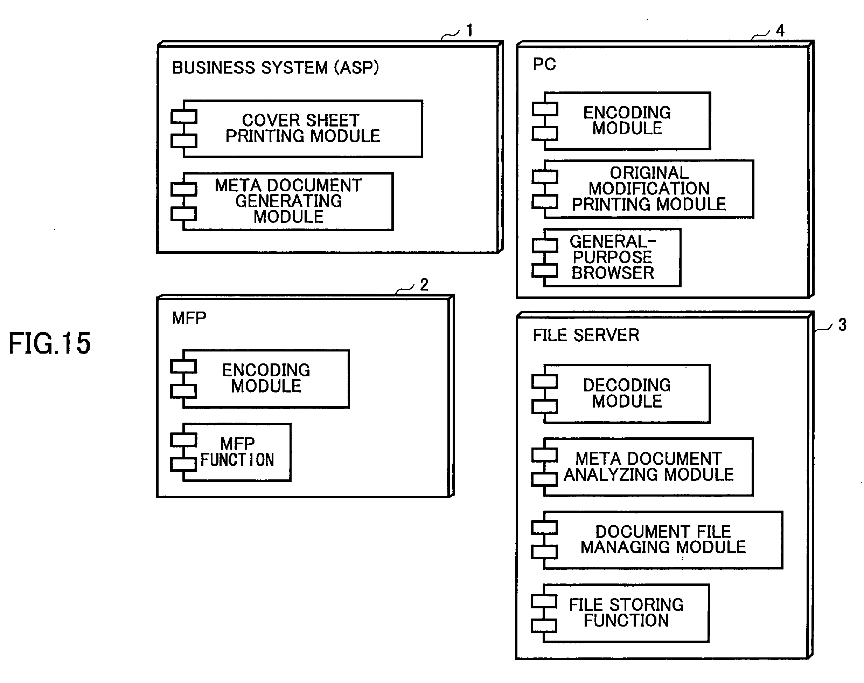

In FIG. 14, the cover sheet printing function F0 or the original modification printing function F0+, the meta information generation function F1 and the cover sheet generation function F3 or the original modification function F3+ are disposed in the business system 1. The encoding function F2_{P} and the original modification function F3p+ are disposed in the PC 4. Further, the encoding function F2, the printing function F4, the scanning function F5 and the meta information generation function F1_{M} are disposed in the MFP 2. The cover sheet analyzing function F6, the decoding function F7, the meta information analyzing function F8, the document registration function F9, the meta information registration function F10 and the meta information generation function F1_{F} are disposed in the file server 3. FIG. 15 shows an arrangement of components in this case. In FIG. 15, the cover sheet printing module and the meta information generating module are disposed in the business system 1. The encoding function and the MFP function are disposed in the MFP 2. The decoding module, the meta document analyzing module, the document file managing module and the file storing function are disposed in the file server 3. The encoding module, the original modification printing module and the general-purpose browser are disposed in the PC 4.

### <ASP scanning>

A scanned document management method according to a second embodiment of the present invention will now be described. In the scanned document management method according to the second embodiment, the present invention is applied for ASP scanning described above.

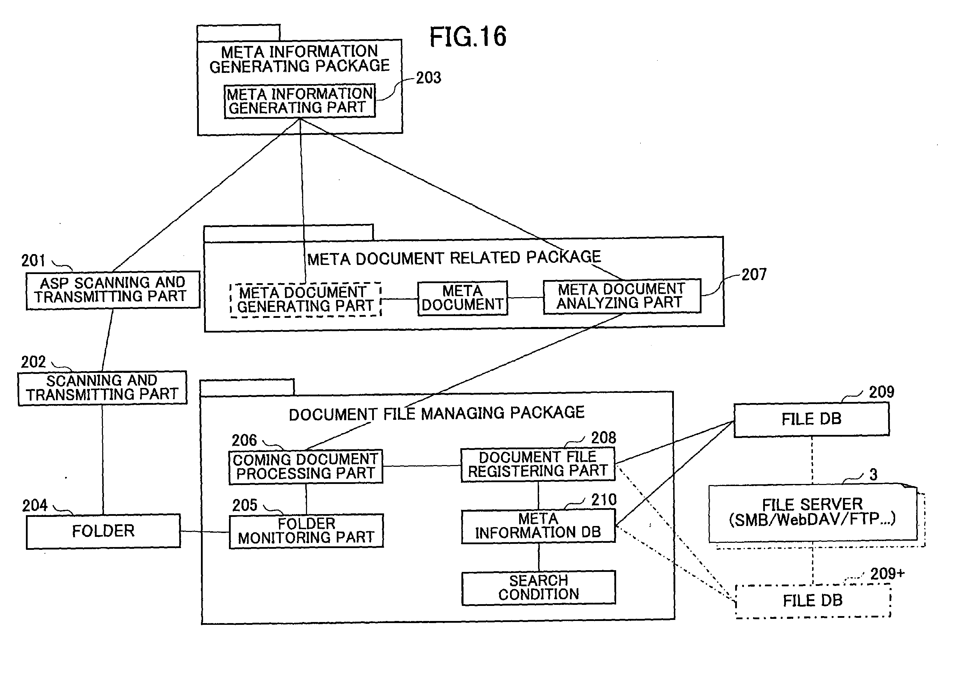

FIG. 16 shows a class diagram of the second embodiment.

In FIG. 16, as components of functional parts, an ASP scanning and transmitting part 201 for ASP scanning, a scanning and transmitting part 202 provides a function of MFP, a meta information generating part 203 included in a meta information generating package, a folder 204 to which a scanned document is delivered, a folder monitoring part 205 and a coming document processing part 206 included in a file managing package, a meta document analyzing part 207 included in a meta document related package, a document file registering part 208 included in a document file managing package, a file DB 209 of a file server 3, a meta information DB 210 of the file server 3 included in the document file managing package, are provided.

It is noted that the document file registering part 208 may act as a storage manager for allocating registration destinations to a plurality of file servers. In this case, a file DB 209+ shown acts as another file server. As the plurality of file servers, for example, file servers operating in a LAN (Local Area Network), file servers operating in a WAN. (Wide Area Network), or such (i.e., online file serves) may be used.

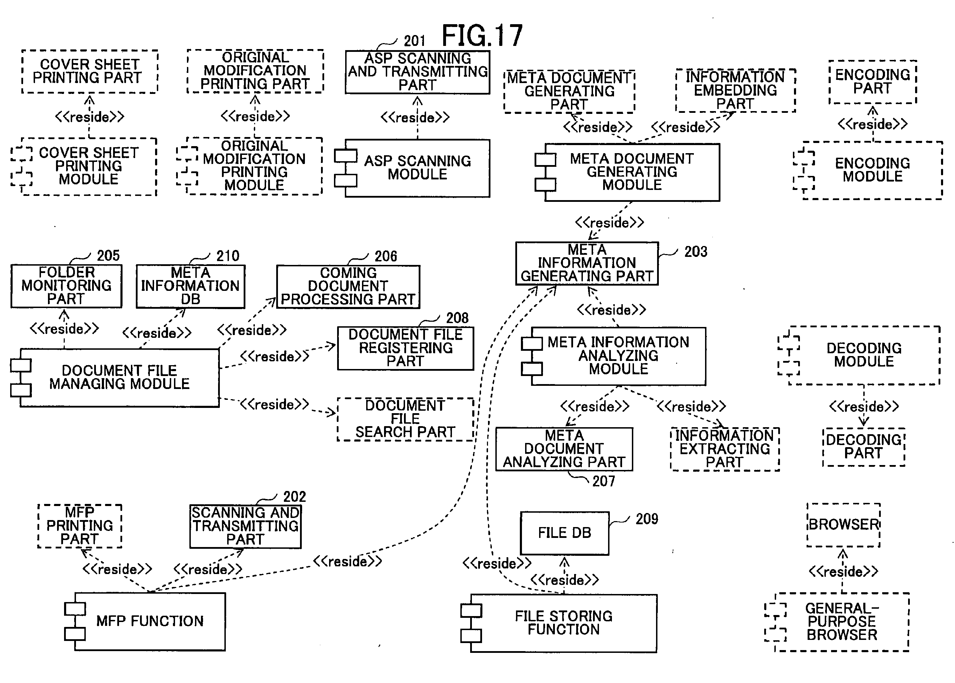

FIG. 17 shows components in the second embodiment.

In FIG. 17, the ASP scanning and transmitting part 210 belongs to an ASP scanning module, the scanning and transmitting part 202 belongs to a MFP function, the meta information generating part 203 belongs to a meta document generating module, a meta document analyzing module, the MFP function and a file storing function. The folder monitoring part 205, the coming document processing part 206, the document file registering part 208 and the meta information DB 210 belong to a document file managing module. The meta document analyzing part 207 belongs to a meta document analyzing module. The file DB belongs to the file storing function.

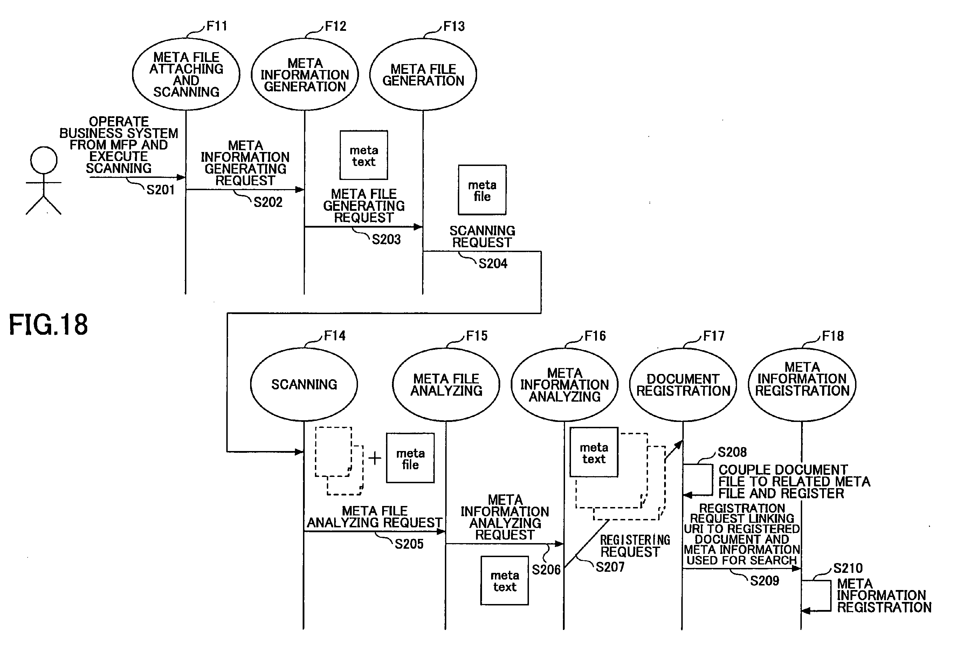

FIG. 18 shows a general configuration of processing of ASP scanning.

In FIG. 18, when execution of scanning is requested to a meta file attaching and scanning function F11 (Step S201), the meta file attaching and scanning function F11 makes a meta information generating request to the meta information generating function F12 as a result of the business system 1 being operated from the MFP 2 (Step S202).

The meta information generating function F12 generates meta information (for example, meta information described above with reference to FIG. 6), requests the meta file generating function F13 to generate a meta file (Step S203), the meta file generating function F13 generates a meta file from the given meta information and requests the scanning fruition F14 to carry out scanning (Step S204).

The scanning function F14 thus scans a target document, and requests the meta file analyzing function F15 to analyses the thus-generated meta file, with document scanned image data obtained from the target document being thus scanned and the meta file (Step S205).

The meta file analyzing function F15 extracts the meta file and requests the meta information analyzing function F16 to analyze the meta information of the meta file (Step S206), and the meta information analyzing function F16 requests the document registration function F17 to carry out document registration (Step S207).

The document registration function F17 couples the document file (i.e., the document scanned image data) to the meta file, and carries out registration thereof together (Step S208). The document registration function F17 requests the meta information registration function F18 to make registration with a link between a URI of the registered document and the meta information used for a search (Step S209). The meta information registration function F18 thus registers the meta information (Step S210).

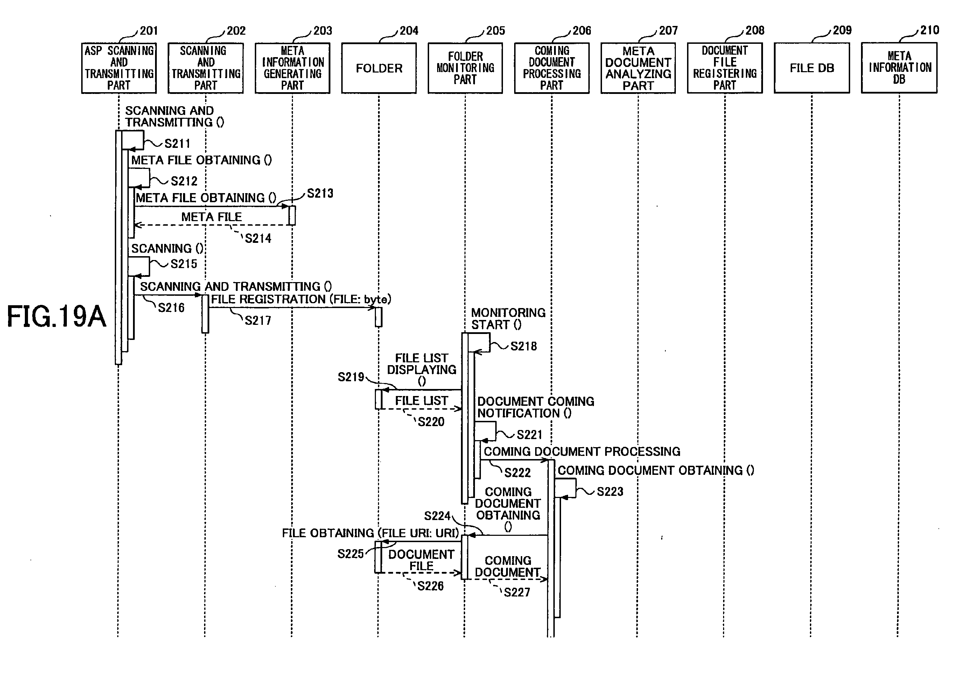

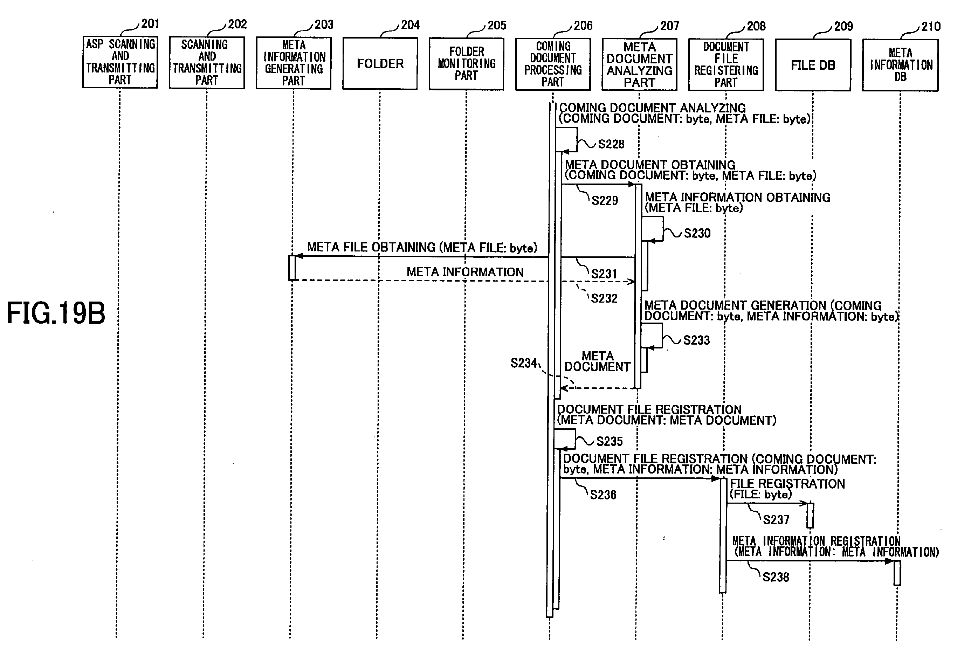

FIGS. 19A and 19B show a sequence of an example of processing of the ASP scanning in detail.

In FIGS. 19A and 19B, for starting scanning of a given document and transmitting thus-obtained document image data (Step S211), the ASP scanning and transmitting part 201 starts obtaining a meta file (Step S212), thus requests the meta information generating part 203 to obtain the meta file (Step S213), the meta information generating part 203 generates the meta file, and the ASP scanning and transmitting part 201 thus obtains the meta file (including meta information such as that shown in FIG. 6, for example) (Step S214).

Next, the ASP scanning and transmitting part 201 starts scanning (Step S215), thus requests the scanning and transmitting part 202 to actually carry out scanning of the given document and transmitting thus-obtained document image data (Step S216), and the scanning and transmitting part 202 registers a file of the thus obtained document image data together with the meta file of the meta information, in the folder 204 (Step S217).

The folder monitoring part 205 starts monitoring the folder 204 (Step S218), requests the folder 204 to display a list of files (Step S219), and obtains the file list (Step S220).

Next, the folder monitoring part 205 starts document coming notification (Step S221), and thus, requests the coming document processing part 206 to carry out document coming processing (Step S222).

The coming document processing part 206 thus starts obtaining a coming document (i.e., the above-mentioned file including the document image data and the meta file) (Step S223), requests the folder monitoring part 205 to obtain the coming document (Step S224), the folder monitoring part 205 requests the folder 204 to obtain a file (Step S225), the folder 204 returns the file to the folder monitoring part 205 (Step S226), which file is the file of the above-mentioned document image data as well as the meta file, and the folder monitoring part 205 returns the coming document (the file of the document image data and the meta file) to the coming document processing part 206 (Step S227).

Next, the coming document processing part 206 starts analyzing of the coming document (Step S228), and requests the meta document analyzing part 207 to obtain a meta document from the meta file (Step S229).

Next, the meta document analyzing part 207 starts obtaining meta information from the meta file (Step S230), requests the meta information generating part 208 to actually obtain the meta information from the meta file (Step S231), and obtains the meta information from the meta information generating part 203 (Step S232).

Next, the meta document analyzing part 207 starts generating of the meta document from the meta information as well as the above-mentioned file of the document image data) (Step S233), and returns the thus-obtained meta document to the coming document processing part 206 (Step S234).

The coming document processing part 206 starts registration of a document file (Step S235), requests the document file registering part 208 to register the document file of the above-mentioned document image data obtained from the meta document (Step S236), the document file registering part 208 registers the document file in the file DB 209 (Step S237), and also, the document file registering part 208 registers the meta information obtained from the meta document, in the meta information DB 210 (Step S238).

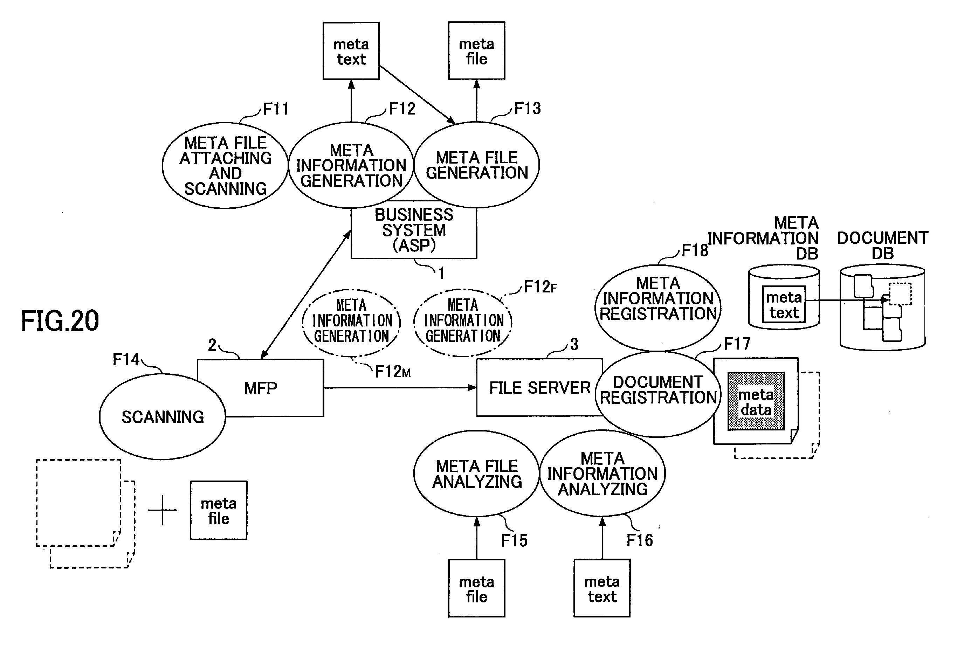

FIG. 20 shows a specific example of an arrangement of functional parts for ASP scanning.

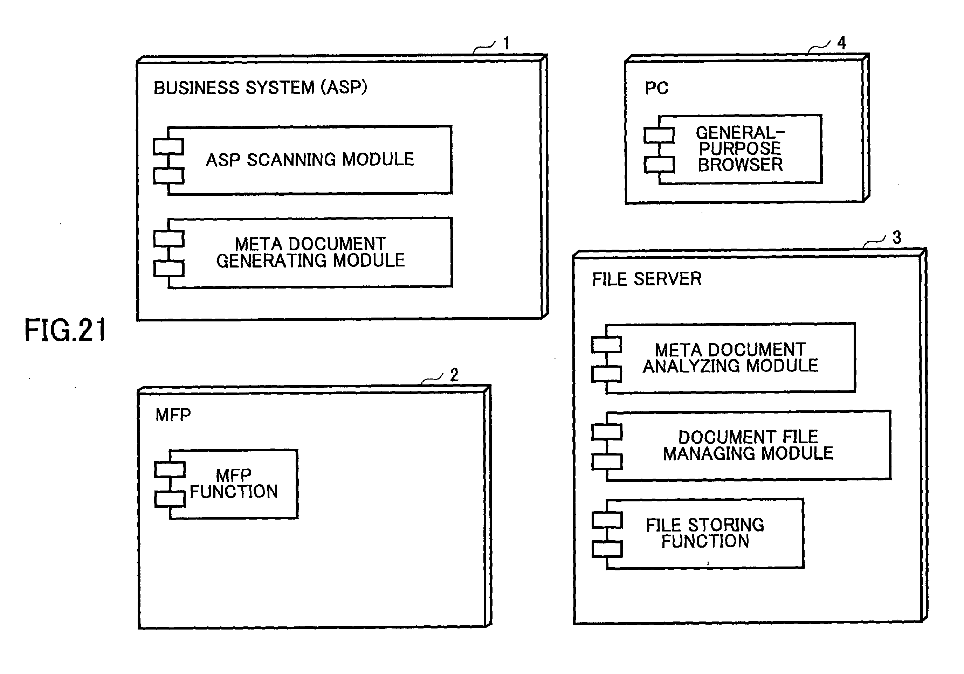

In FIG. 20, the meta file attaching and scanning function F11, the meta information generation function F12 and the meta file generation function F13 are disposed in the business system 1. The scanning function F14 and the meta information generation function F12_{M} are disposed in the MFP 2. The meta file analyzing function F15, the meta information analyzing function F16, the document registration function F17, the meta information registration function F18 and the meta information generation function F12_{F} are disposed in the file server 3. FIG. 21 shows a component arrangement in this case. In FIG. 21, in the business system, the ASP scanning module and the meta document generation module are disposed. In the MFP 2, an MFP function is disposed. In the file server 3, the meta document analyzing module, the document file managing module and the file storing function are disposed. In the PC 4, a general-purpose browser is disposed.

### <Search>

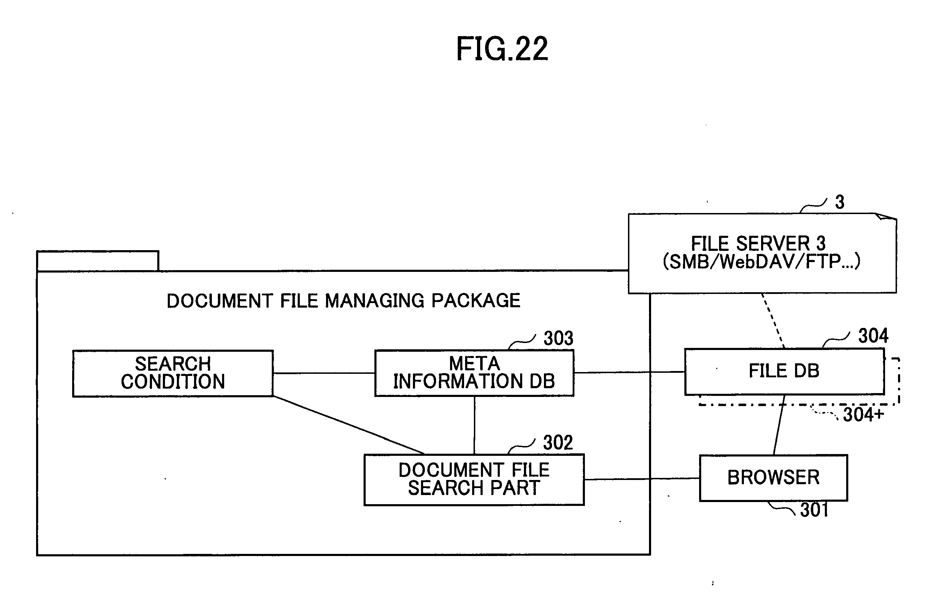

FIG. 22 shows a class diagram for search in common for the case of MFP scanning (i.e., the first embodiment) and the case of ASP scanning (i.e., the second embodiment).

In FIG. 22, as components of functional parts, a browser 301 provided in the PC 4, a document file search part 302 and a meta information DB 303 included in a document file managing package, and file DB 304 of the file server 3, are provided. It is noted that, in the case where a plurality of file servers are used as registration destinations, a file DB 304+ acts as another file server.

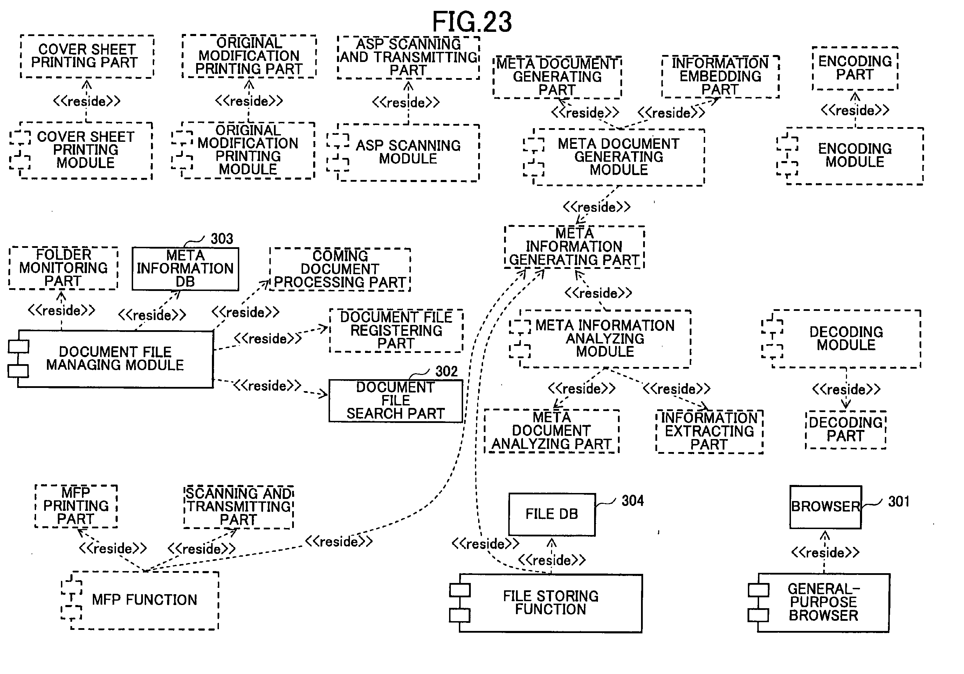

FIG. 23 shows components used for search in common for both cases of MFP scanning and ASP scanning.

In FIG. 23, the browser 301 belongs to the general-purpose browser, the document file search part 302 and the meta information DB 303 belong to the document file managing module, and the file DB 304 belongs to the file storing function.

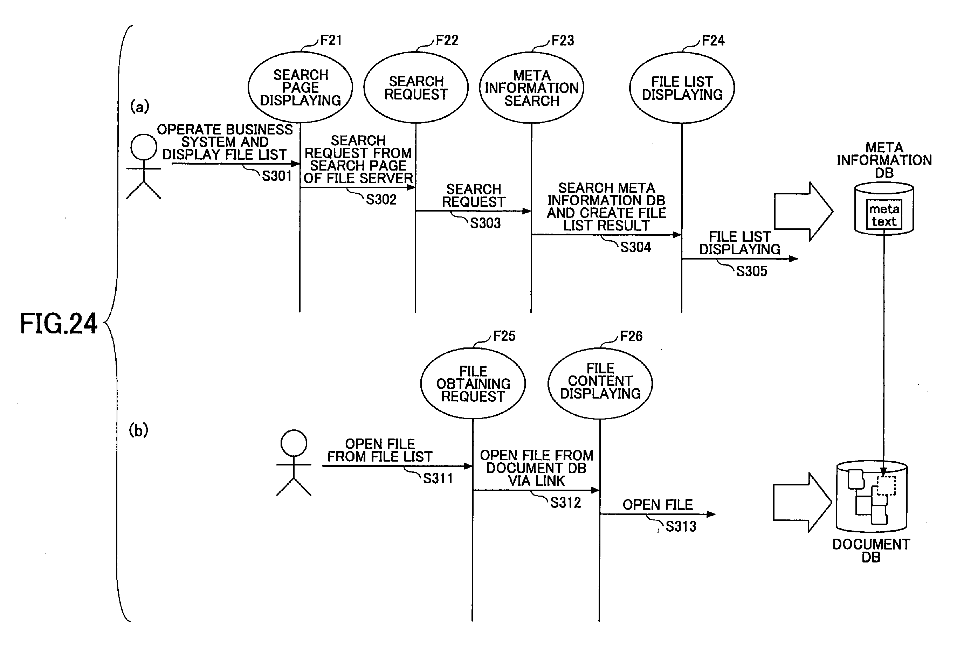

FIG. 24 shows a general configuration of processing of the search. FIG. 24 (a) shows processing of the search, and FIG. 24 (b) shows processing of opening a file from a file list obtained from the search.

In FIG. 24 (a), when the business system 1 is operated from the PC 4, and a search page displaying function F21 is requested to display a file list (Step S301), the search page displaying function F21 requests a search request function F22 to carry out a search, resulting from a request input by a user from a search page of the file server 3 (Step S302).

The search request function F22 requests a meta information search function F23 to carry out a search (Step S303), the meta information search function F23 searches the meta information DB to create a file list result from meta information, transfers it to a file list displaying function F24 (Step S304), and the file list displaying function 24 displays the file list to the user (Step S305).

In FIG. 24 (b), when a request for opening a desired file from the file list is made by the user to a file obtaining request function F25 (Step S311), the file obtaining request function F25 requests a file content displaying function F26 to open the corresponding file from the document DB based on a given link (Step S312), and the file content displaying function F26 opens the corresponding file to the user (Step S313).

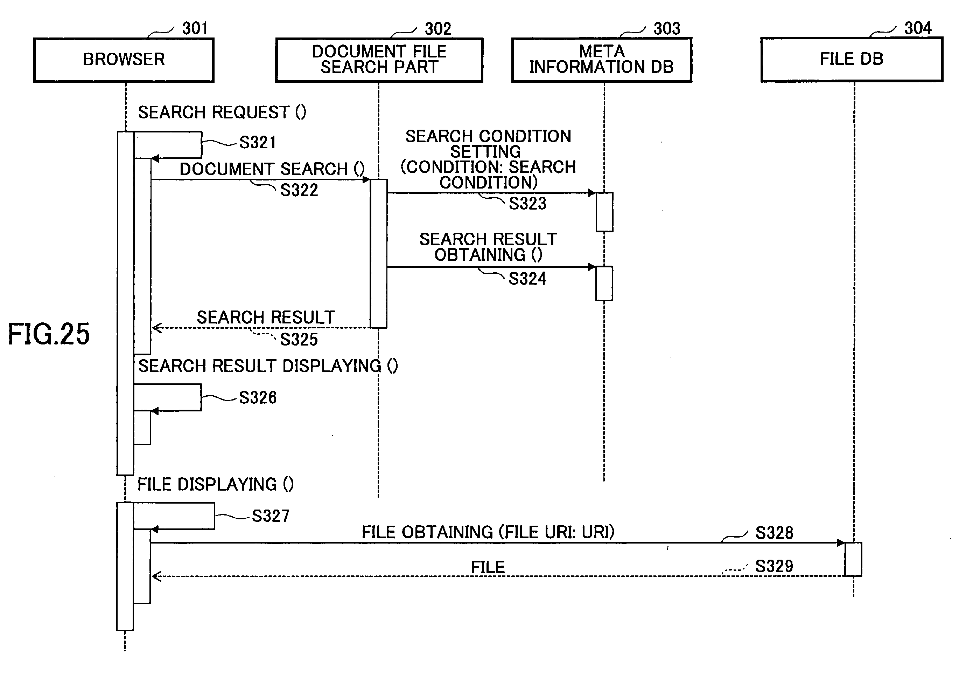

FIG. 25 shows a sequence of an example of processing of the search in detail.

In FIG. 25, when the browser 301 starts a search request (Step S321), it thus requests the document file search part 302 to carry out a document search (Step S322).

The document file search part 302 sets a search condition in the meta information DB 303 (Step S323), thus obtains a search result from the meta information DB 303 (Step S324), and the document file search part 302 returns the search result to the browser 301 (Step S325). The browser 301 displays the search result (Step S326).

Next, when the browser 301 starts file displaying (Step S327), it thus requests the file DB 304 to obtain the corresponding file (Step S328), obtains the file from the file DB 304, and displays it (Step S329).

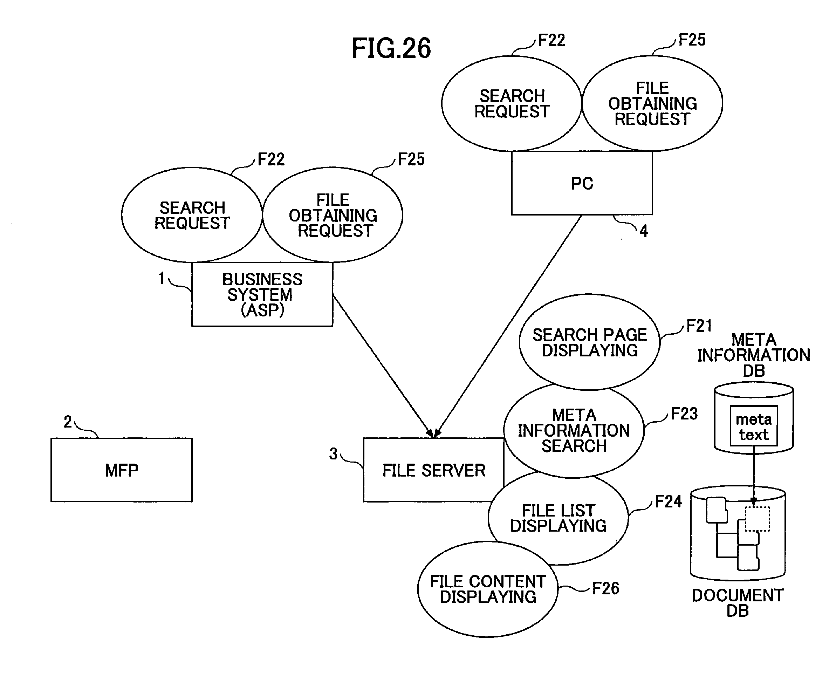

FIG. 26 shows an example of a specific arrangement of functional parts used for the search for both cases of MFP scanning and ASP scanning.

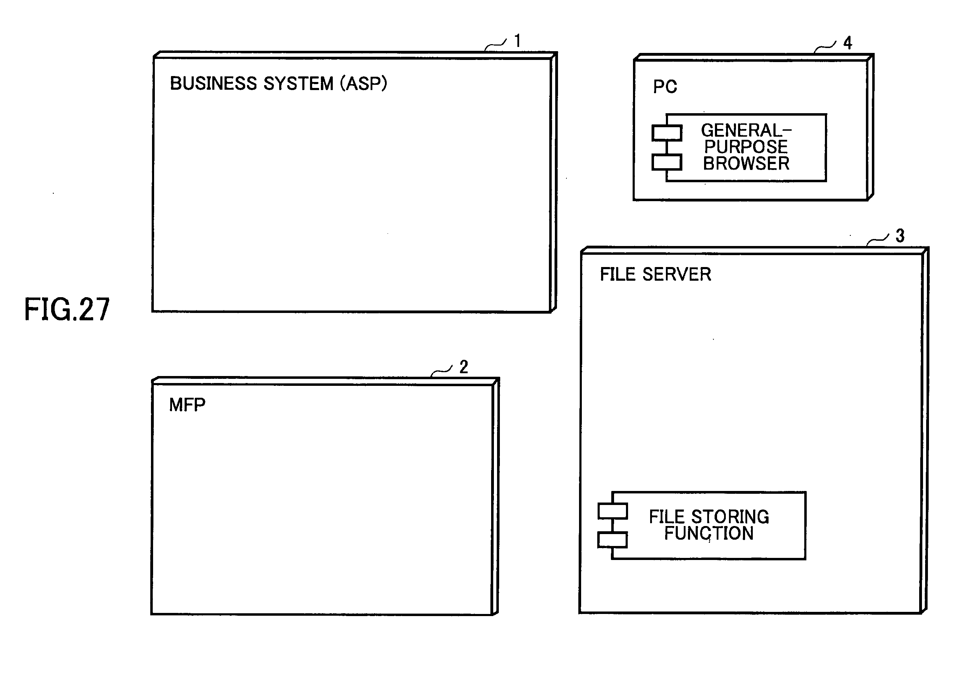

In FIG. 26, the search request function F22 and the file obtaining function F25 are disposed in the PC 4. In the business system 1, the search request function F22 and the file obtaining request function F25 are disposed. In the file server 3, the search page displaying function F21, the meta information search function F23, the file list displaying function F24 and the file content displaying function F26 are disposed. FIG. 27 shows a component arrangement in this case. In FIG. 27, the file storing function is disposed in the file server 3. In the PC 4, the general-purpose browser is disposed. Since the file server 3 provides the search service, no special functions are required for the business system 1, the MFP 2 and the PC 4.

### <Summary>

As described above, according to the first mode for carrying out the present invention (i.e., the first and second embodiments), correspondence between document management in the business system and documents in the file server 3 is provided by a link provided by the meta information. As a result, it is possible to manage the documents in the file server 3 separate from the specifications of the business system 1. Thus, it is possible to improve browsability of the file server in the scanned document management system in which the MFP 2, the business system 1 and the file server 3 are associated with each other.

### <Second mode for carrying out the present invention>

A second mode for carrying out the present invention (i.e., third and fourth embodiments of the present invention) will now be described.

A scanned document management system in any one of the third and fourth embodiments of the present invention, described below, corresponds to the scanned document management system in the related art described above with reference to FIGS. 1 and 2, includes a business system 1001, an MFP 1002, a file server 1003 and a PC 1004, corresponding to the business system 11, the MFP 12, the file server 13 and the PC 14, shown in FIGS. 1 and 2, respectively, and includes improvements described below.

### <MFP scanning>

A scanned document management method according to a third embodiment of the present invention will now be described. In the scanned document management method according to the third embodiment, the present invention is applied for MFP scanning described above.

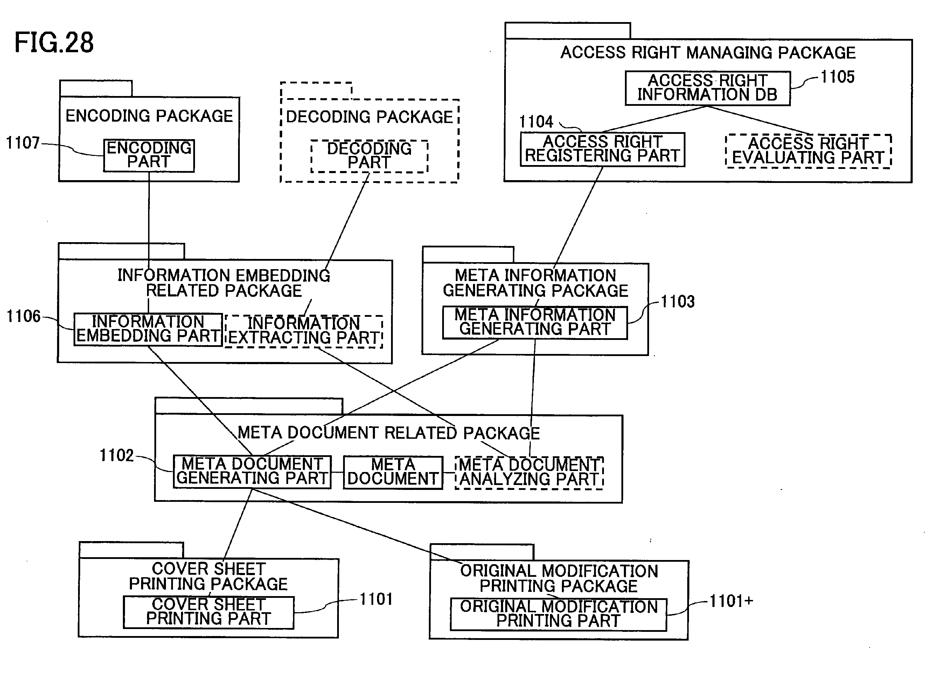

FIG. 28 shows a class diagram for cover sheet printing or original modification in the third embodiment.

In FIG. 28, as components of a functional part, a cover sheet printing part 1101 included in a cover sheet printing package, an original modification printing part 1101+ included in an original modification printing package, a meta document generating part 1102 included in a meta document related package, a meta information generating part 1103 included in a meta information generating package, an access right registering part 1104 and an access right information DB 1105 included in an access right managing package, an information embedding part 1106 included in an information embedding related package, and an encoding part 1107 included in an encoding package, are provided. It is noted that when only the cover sheet printing should be carried out, the original modification package is not required. On the other hand, when only the original modification printing is carried out, the cover sheet printing package is not required.

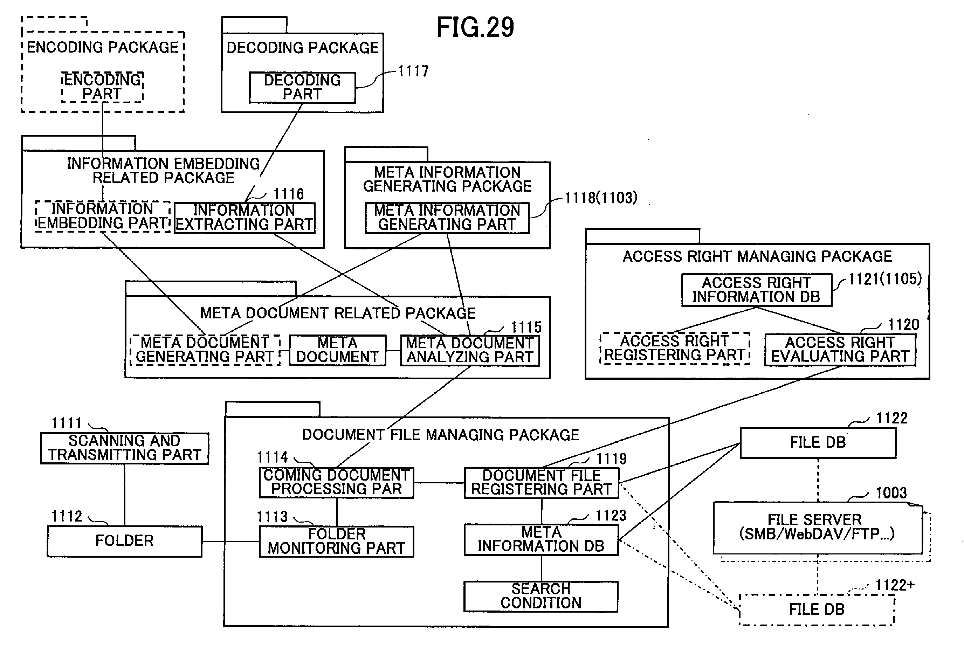

FIG. 29 shows a class diagram for MFP scanning in the third embodiment.

In FIG. 29, as components of functional parts, a scanning and transmitting part 1111 which is a function of MFP, a folder 1112 which is a transmission destination of scanned documents, a folder monitoring part 1113 and a coming document processing part 1114 included in a document file managing package, a meta document analyzing part 1115 included in the meta document related package, an information extracting part 1116 included in the information embedding related package, a decoding part 1117 included in a decoding package, a meta information generating part 1118 included in the meta information generating package, a document file registering part 1119 included in the document file managing package, an access right evaluating part 1120 and an access right information DB 1121 included in the access right managing package, a file DB 1122 included in file server 1003, and a meta information DB 1123 of the file server 1003 included in the document file managing package, are provided. Components shown by broken lines are those which are not used in MFP scanning.

It is noted that the document file registering part 1119 may act as a storage manager for allocating registration destinations to a plurality of file servers. In this case, a file DB 1122+ acts as another file server. As the plurality of file servers, for example, file servers operating in a LAN (Local Area Network), file servers operating in a WAN (Wide Area Network), or such (i.e., online file serves) may be used.

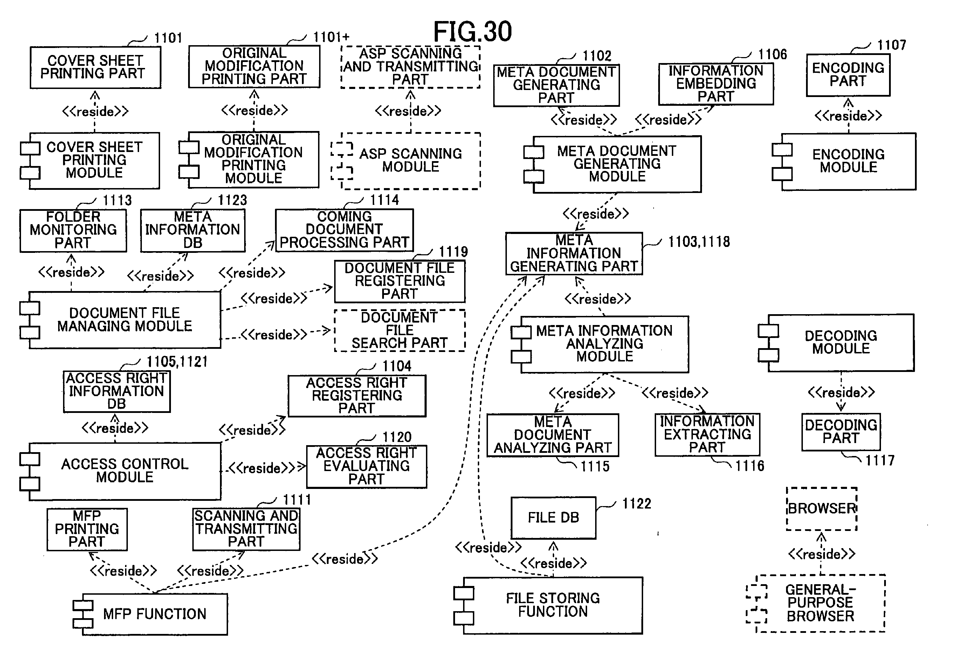

FIG. 30 shows components concerning the third embodiment.

In FIG. 30, the cover sheet printing part 1101 belongs to a cover sheet printing module, the original modification printing part 1101+ belongs to an original modification printing module, the meta document generating part 1102 and the information embedding part 1106 belong to a meta document generating module, the meta information generating part 1103 (1118) belongs to the meta document generating module, a meta document analyzing module, a MFP function and a file storing function, and the encoding part 1107 belongs to an encoding module. Further, the scanning and transmitting part 1111 belongs to the MFP function, the folder monitoring part 1113, the coming document processing part 1114, the document file registering part 1119 and the meta document DB 1123 belong to a document file managing module, the meta document analyzing part 1115 and the information extracting part 1116 belong to a meta document analyzing module, the decoding part 1117 belongs to a decoding module and the file DB 1122 belongs to the file storing function. The access right information DB 1105 (1121), the access right registering part 1104 and the access right evaluating part 1120 belong to an access control module

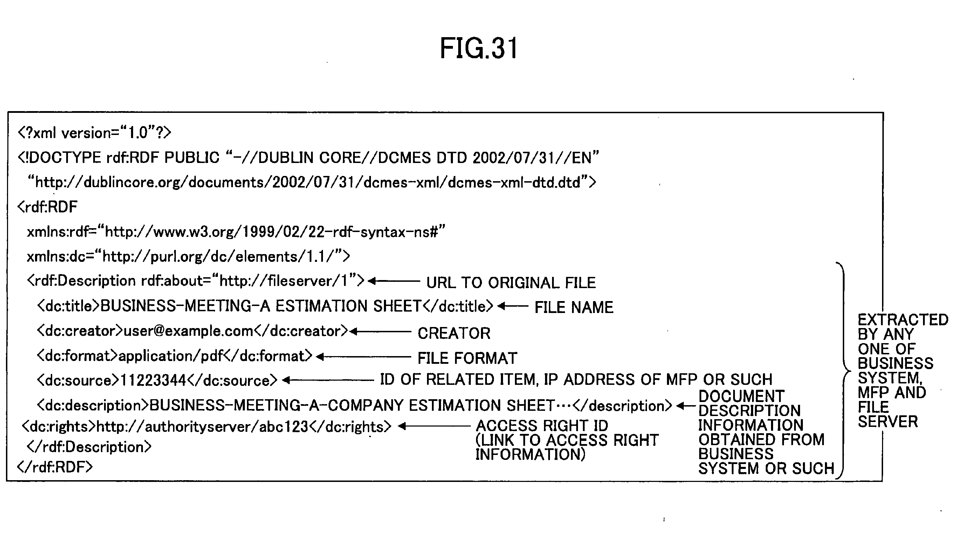

FIG. 31 shows an example of meta information described in XML (extensible Markup Language). The meta information conforms to Dublin Core (see http://dublinecore.org/documents/dces/) which is used for description of biographic information as a general vocabulary describing the meta information. In FIG. 31, in an rdf element, a description of a URI (Uniform Resource Identifiers) for an original file, a description indicating a file name, a description indicating a creator, a description indicating a file format, a description of a corresponding item ID in a business system or an IP (Internet Protocol) address or such of the MFP, a description of a document description information obtainable from the business system, a description of an access right ID which is a link to access right information, are included.

The description of a URI for an original file uses a unique URI separate from specifications of the business system provided as an ASP, such as "http://fileserver/1". As a result, it may be read directly from a general purpose browser by means of designation of the URI. The meta information may be extracted from information obtained by means of the business system, or, also, may be extracted from information (scanning date/time, a corresponding equipment ID, a user ID and so forth) obtainable when the MFP carries out scanning, from the file server to which registration is made, or such. Further, when an online storage is used as a file server as mentioned above, a protocol name required for accessing, authentication information required for logging in and so forth may be included in the meta information. As the authentication information, a set of a user name and a password or such, a set of a user authentication ticket indicating that a current user is authorized and a session ID, a folder ticket permitting accessing to a specific folder or such, may be used. Further, when the number of characters of the meta information is limited, it is possible that, a corresponding storage type or such is described in the meta information, and a necessary URI, a protocol name and so forth are described in data which is linked from the storage type. It is noted that the meta information is embedded in a cover sheet or a part of an original document in a case of MFP scanning, in a form of a QR code, a tint block or such. The meta information is linked externally and is managed as an index in a case of ASP scanning.

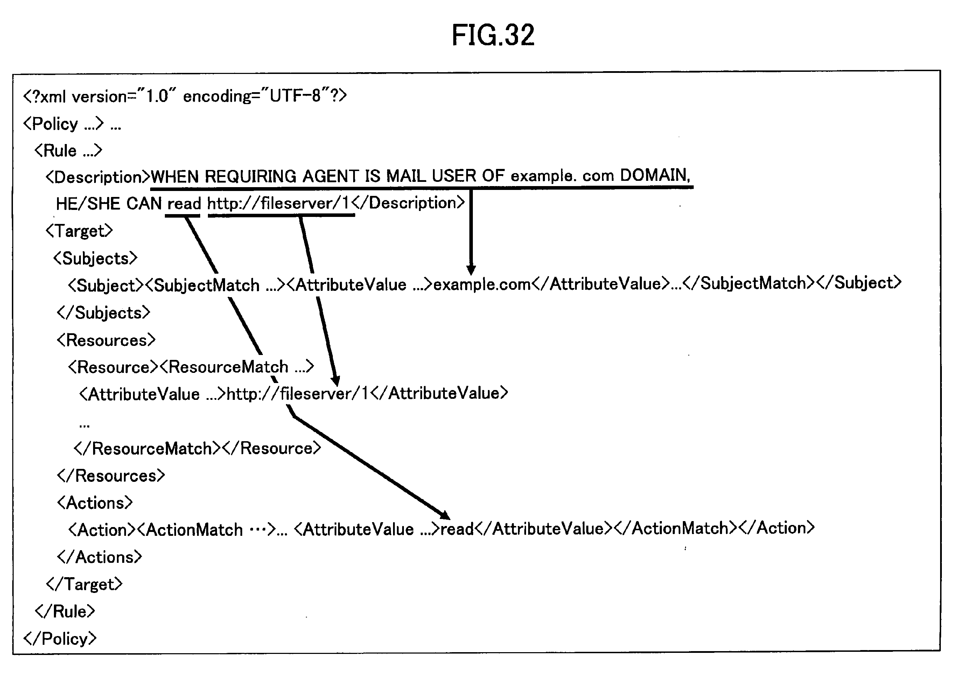

FIG. 32 shows an example of access right information described in XACML (extensible Access Control Markup Language) which has language specifications for access control studied by OASIS (Organization for the Advancement of Structured Information Standards). This information is linked from the access right ID shown in FIG. 31. The access right information shown in FIG. 32 is thus linked with the meta information (i.e., basic meta information) shown in FIG. 31, and as a result, meta information is created including both as a unit.

In FIG. 32, in a Description element, the contents of access control are described. There, such an example is shown that 'when a requiring agent is a mail user of an 'example. com' domain, he/she can read 'http://fileserver/1'. In the contents of access right, a condition for the requesting agent is described in a Subject element, an access target is described in a Resource element, and operation contents are described in an Actions element.

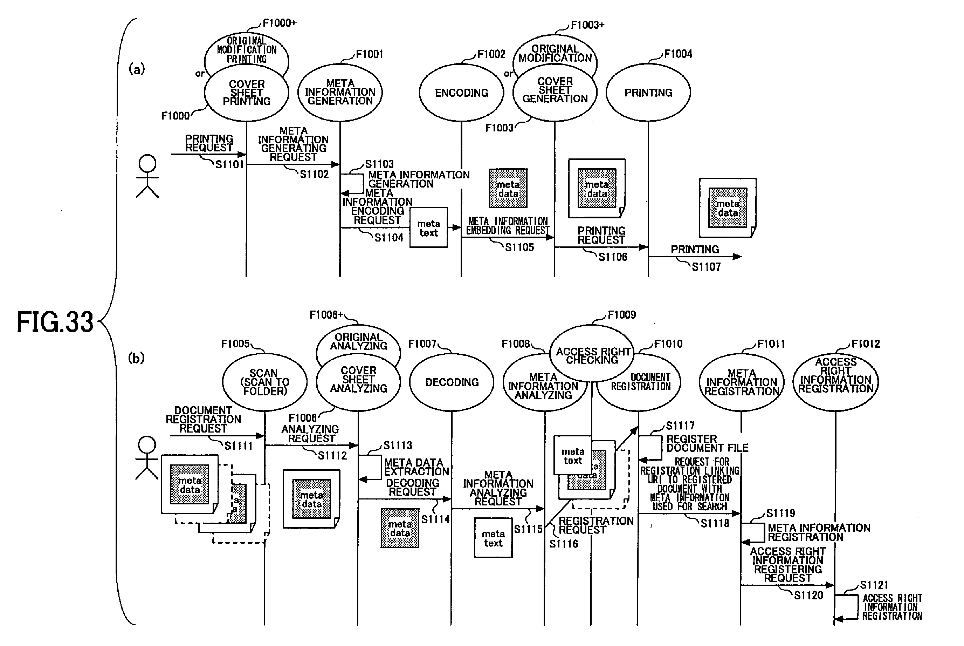

FIG. 33 shows a general configuration of processing of cover sheet printing and so forth, and MFP scanning. FIG. 33 (a) shows a general configuration of processing of cover sheet printing or original modification printing. FIG. 33 (b) shows a general configuration of processing of MFP scanning. The processing of cover sheet printing is processing of embedding meta information in a cover sheet used as a front page in a case of scanning, and printing out the cover sheet. This processing is carried out simultaneously when a document, to which an additional description is to be made by handwriting, is printed out, or, immediately before a document to which an additional description has been made by handwriting is scanned. Further, the processing of original modification printing is processing of printing out a document in a state in which meta information is previously embedded, when the document to which an additional description is to be made by handwriting is printed out. In this case, it is not necessary to use a cover sheet in a case of scanning.

In FIG. 33 (a), when a printing request is made (Step S1101) to a cover sheet printing function F1000 in the case of cover sheet printing, or to an original modification printing function F1000+ in the case of original modification printing, the cover sheet printing function F1000 or the original modification printing function F1000+ carries out a meta information generating request (Step S1102) to the meta information generation function F1001.

The meta information generation function F1001 generates meta information (see FIGS. 31 and 32) (Step S1103), makes a meta information encoding request to an encoding function F1002 (Step S1104), and the encoding function F1002 makes a meta information embedding request to a cover sheet generation function F1003 or an original modification function F1003+ with a code created from the meta information (Step S1105).

The cover sheet generation function F1003 or the original modification function F1003+ makes a printing request to a printing function F1004 (Step S1016), and the printing request F1004 prints out a cover sheet or an original document with the code embedded therein (Step S1107).

In FIG. 32 (b), when a document registration request is made to a scanning function (SCAN TO FOLDER) F1005 (Step S1111) after a target document is placed on the cover sheet which thus acts as a front page, or, as it is in a case of a document in which the meta information is previously embedded, the scanning function F1005 carries out scanning thereof, and also, makes a request for analyzing the cover sheet or the original document itself to a cover sheet analyzing function F1006 or an original analyzing function F1006+ (Step S1112).

The cover sheet analyzing function F1006 or the original analyzing function F1006+ extracts the embedded code of the meta information from the cover sheet or the original document, which has been obtained from the scanning as mentioned above, and makes a decoding request to as a decoding function F1007 (Step S1114).

The decoding function F1007 decodes the thus-extracted code of the meta information, then makes a meta analyzing request to a meta information analyzing function F1008 with the decoded meta information (Step S1115), and the meta information analyzing function F1008 makes a registration request to a document registration function F1010 via an access right checking function F1009 (Step S1116).

The document registration function F1010 registers, as a document file, after coupling the original document scanned image data with the cover sheet scanned image data in the case where the cover sheet accompanies the original document, or as it is in a case where no cover sheet accompanies the original document file (Step S1117), then makes a registration request to carry out registration with a link between a URI of the registered document image data and the meta information used for a search for the corresponding document (Step S1118) to a meta information registration function F1011.

The meta information registering function F1011 registers the meta information (Step S1119), requests the access right information registering part F1012 to register access right information (Step S1120), and the access right information registering part F1012 registers the access right information (Step S1121).

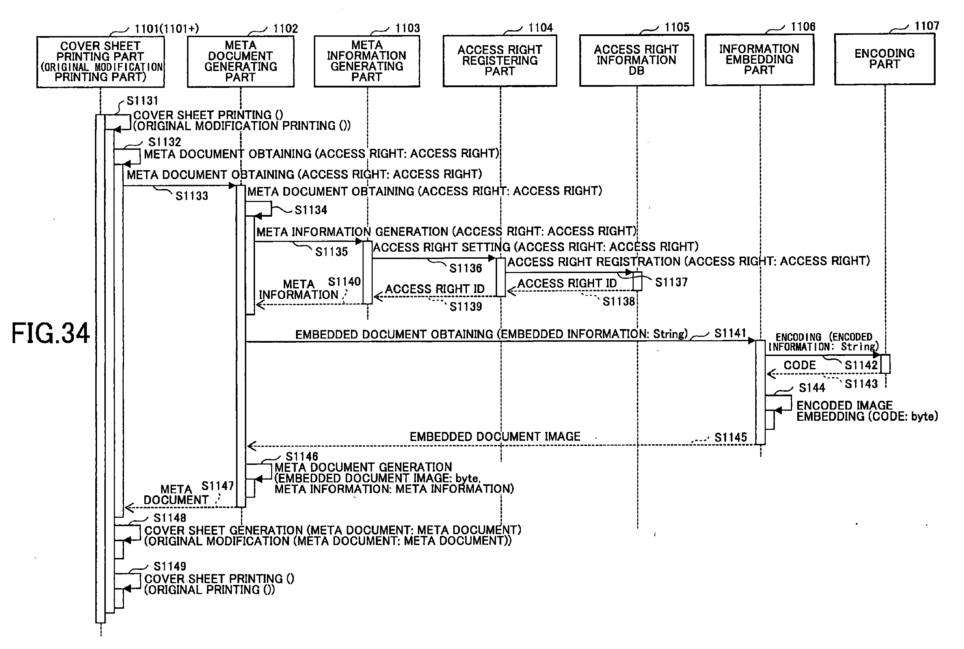

FIG. 34 shows a sequence of an example of the processing of cover sheet printing and so forth.

In FIG. 34, when starting printing out of the cover sheet or the original document (Step S1131), the cover sheet printing part 1101 or the original modification printing part 1101+ starts obtaining a meta document (Step S1132), and requests the meta document generating part 1102 to obtain the meta document (Step S1133).

The meta document generating part 1102 starts obtaining meta information (Step S1134), and requests a meta information generating part 1103 to generate meta information (Step S1135).

The meta information generating part 1103 requests the access right registering part 1104 to set an access right (Step S1136), the access right registering part 1104 registers an access right in the access right DB 1105 (Step S1137), and obtains an access right ID from the access right information DB 1105 (Step S1138) to be included in the thus-generated meta information.

The access right registering part 1104 returns the thus-obtained access right ID to the meta information generating part 1103 (Step S1139), and the meta information generating part 1103 returns the meta information including the access right ID to the meta document generating part 1102 (Step S1140).

Next, the meta document generating part 1102 requests the information embedding part 1106 to obtain image data in which the meta information is embedded (Step S1141), the information embedding part 1106 then requests the encoding part 1107 to encode the meta information (Step S1142), and the information embedding part 1106 obtains a code thus generated by the encoding part 107 (Step S1143).

Next, the information embedding part 1106 creates image data including the thus-obtained code embedded therein (Step S1144), and returns the thus obtained image data in which the code of the meta information is thus embedded, to the meta document generating part 1102 (Step S1145).

Next, the meta document generating part 1102 generates a meta document with the thus-obtained image data including the embedded code of the meta information (Step S1146), and returns the meta document to the cover sheet printing part 1101 or the original modification printing part 1101+ (Step S1147).

The cover sheet printing part 1101 or the original modification printing part 1101+ generates cover sheet image data or original document image data with the use of the thus-obtained meta document (Step S1148), and prints out the cover sheet or the original document (Step S1149).

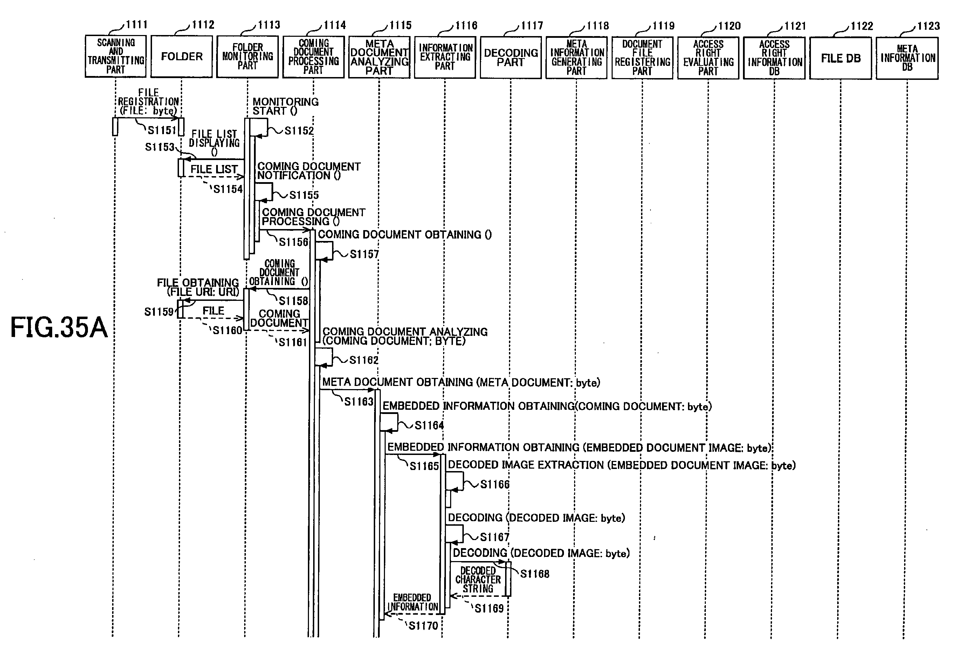

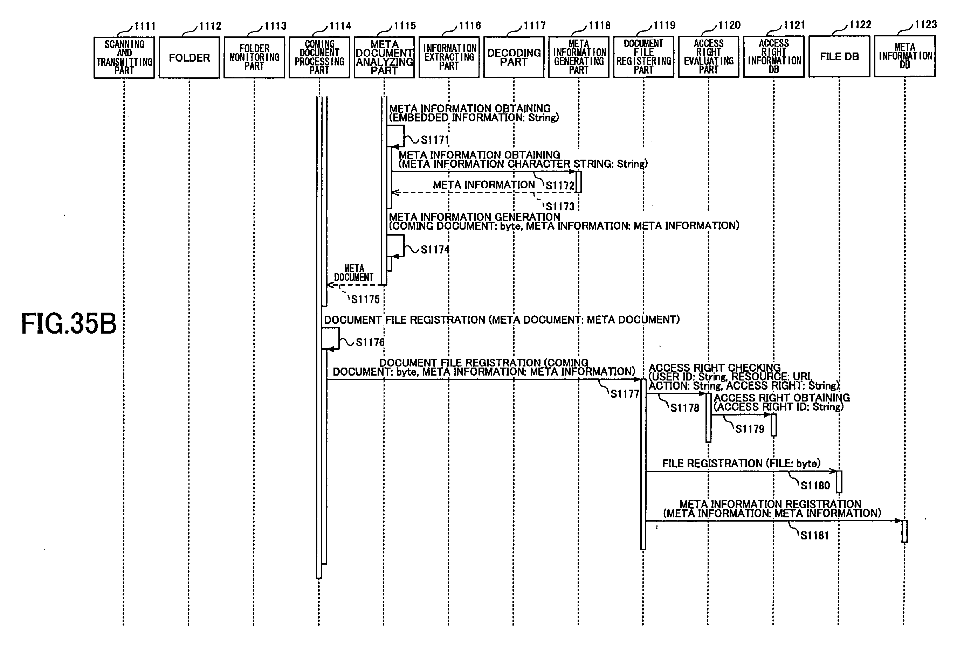

FIGS. 35A and 35B show a sequence of an example of the processing of MFP scanning in detail.

In FIGS. 35A and 35B, the scanning and transmitting part 1111 carries out registration of a file obtained from scanning the cover sheet accompanied original document or only the original document, in the folder 1122 (Step S1151), then, on one hand, the folder monitoring part 1113 starts monitoring the folder 1112 (Step S1152), requests the folder 1112 to display a file list (Step S1153), and obtains the file list (Step S1154).

Next, the folder monitoring part 1113 starts document coming notification (Step S1155), and requests the coming document processing part 1114 to carry out document coming processing (Step S1156).

The coming document processing part 1114 starts obtaining a coming document, i.e., image data of the scanned cover sheet accompanied original document or image data of the scanned only original document (Step S1157), requests the folder monitoring part 1113 to obtain the coming document (Step S1158), the folder monitoring part 1113 requests the folder 1112 to obtain the file (of the image data of the scanned cover sheet accompanied original document or image data of the scanned only original document) (Step S1159), the folder 1112 returns the file to the folder monitoring part 1113 (Step S1160), and the folder monitoring part 1113 returns the thus-obtained file to the coming document processing part 1114 (Step S1161).

Next, the coming document processing part 1114 starts analyzing this file of the coming document (Step S1162), and requests the meta document analyzing part 1115 to obtain a meta document (Step S1163).

The meta document analyzing part 1115 starts obtaining the embedded information from the given file of the coming document (Step S1164), and thus, requests the information extracting part 1116 to obtain the embedded information (Step S1165).

The information extracting part 1116 extracts the image, including the code of the meta information embedded therein, from the above-mentioned file of the coming document (Step S1166), starts decoding the thus-obtained code (Step S1167), actually requests the decoding part 1117 to decode the code (Step S1168), obtains a thus-obtained decoded character string from the decoding part 1117 (Step S1169), and returns to the meta document analyzing part 1115 the decoded characters string of the embedded meta information (Step S1170).

Next, the meta document analyzing part 1115 starts obtaining the meta information (Step S1171), thus requests the meta information generating part 1118 to obtain the meta information (Step S1172), and obtains the meta information from the meta information generating part 1118 (Step S1173).

Next, the meta document analyzing part 1115 generates a meta document from the given meta information together with the image data of the scanned cover sheet accompanied original document or the image data of the scanned only original document (i.e., the file of the coming document) (Step S1174), and returns the thus-obtained meta document to the coming document processing part 1114 (Step S1175).

Next, the coming document processing part 1114 starts registration of the given document file from the meta document (i.e., the file of the image data of the scanned cover sheet accompanied original document or the image data of the scanned only original document) (Step S1176), requests the document file registration part 1119 to register the document file (Step S1177), the document file registration part 1119 requests the access right evaluating part 1120 to carry out access right checking (Step S1178) and the access right evaluating part 1120 obtains an access right from the access right information DB 1121 with the use of the access right ID extracted from the meta information (Step S1179).

Next, the document file registering part 1119 resisters the file in the file DB 1120 (Step S1178), and further the document file registration part 1119 registers the given meta information in the meta information DB 1121 (Step S1179).

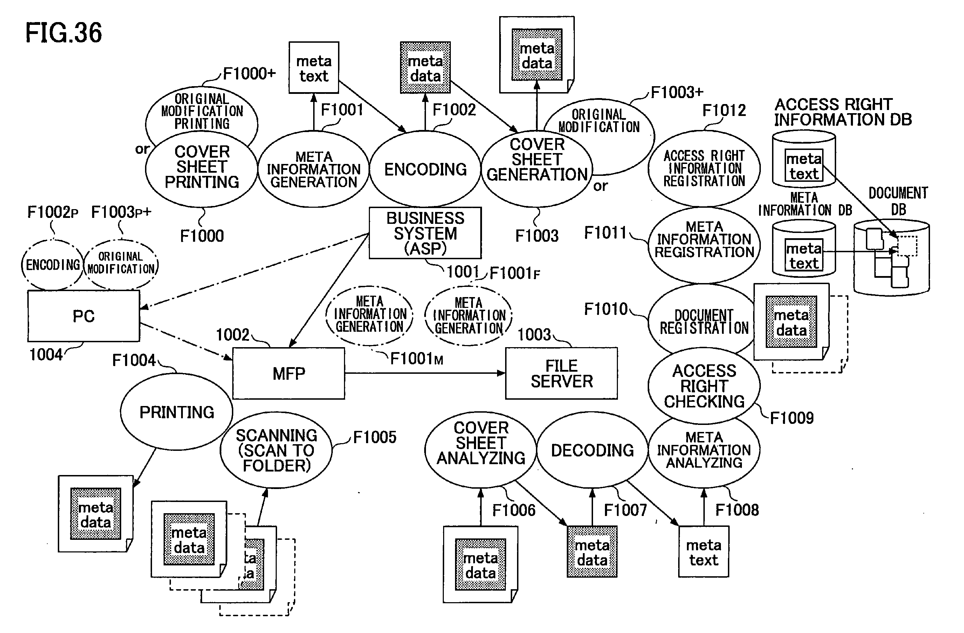

FIGS. 36-41 show specific examples of an arrangement of the functional parts and the components for MFP scanning.

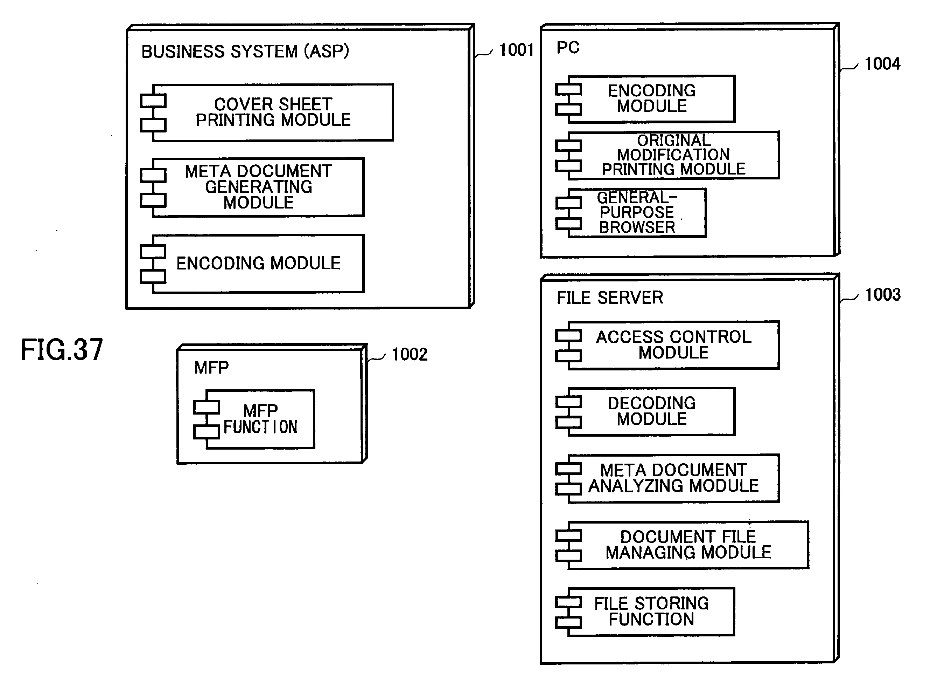

In FIG. 36, the cover sheet printing function F1000 or the original modification printing function F1000+, the meta information generation function F1001, the encoding function F1002 and the cover sheet generation function F1003 or the original modification function F1003+ are disposed in the business system 1001, the encoding function F1002_{P} and the original modification function F1003_{P}+ are disposed in the PC 1004. Further, the printing function F1004, the scanning function F1005 and the meta information generation function F1001_{M} are disposed in the MFP 1002. The cover sheet analyzing function F1006, the decoding function F1007, the meta information analyzing function F1008, the access right checking function F1009, the document registration function F1010, the meta information registration function F1011, the access right information registration function F1112 and the meta information generation function F1001_{F} are disposed in the file server 1003. FIG. 37 shows an arrangement of components in this case. In FIG. 37, the cover sheet printing module, the meta information generating module and the encoding module are disposed in the business system 1001. The MFP function is disposed in the MFP 1002. The access control module, the decoding module, the meta document analyzing module, the document file managing module and the file storing function are disposed in the file server 1003. The encoding module, the original modification printing module and the general-purpose browser are disposed in the PC 1004.

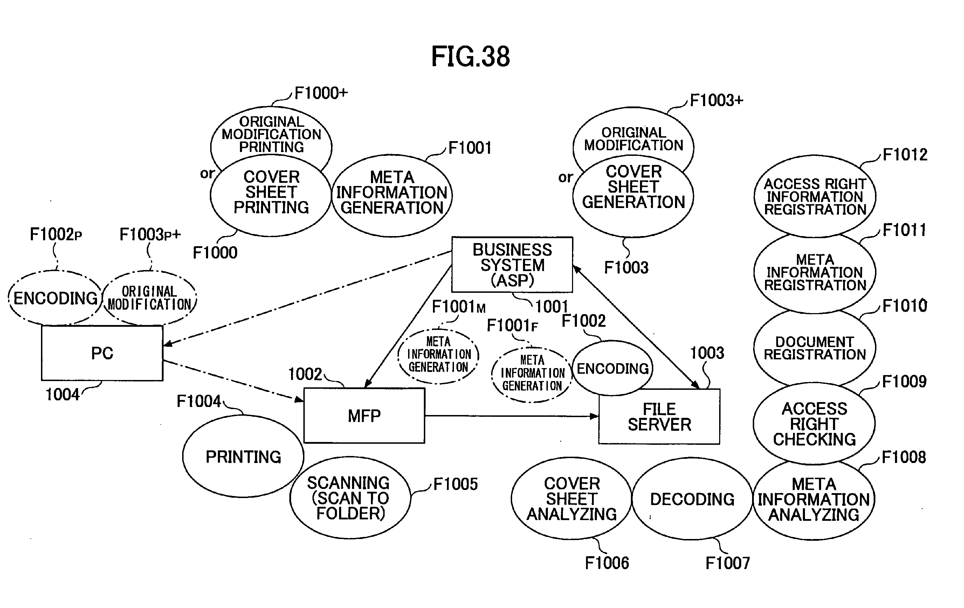

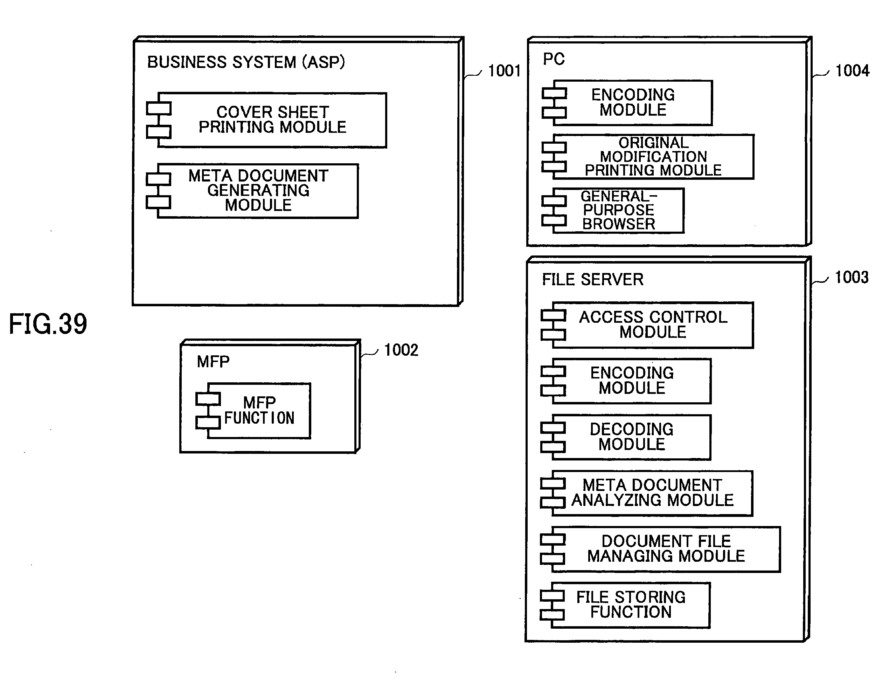

In FIG. 38, the cover sheet printing function F1000 or the original modification printing function F1000+, the meta information generation function F1001 and the cover sheet generation function F1003 or the original modification function F1003+ are disposed in the business system 1001. The encoding function F1002_{P} and the original modification function F1003_{P}+ are disposed in the PC 1004. Further, the printing function F1004, the scanning function F1005 and the meta information generation function F1001_{M} are disposed in the MFP 1002. The encoding function F1002, the cover sheet analyzing function F1006, the decoding function F1007, the meta information analyzing function F1008, the access right checking function F1009, the document registration function F1010, the meta information registration function F1011, the access right information registration function F1112 and the meta information generation function F1001_{F} are disposed in the file server 1003. FIG. 39 shows an arrangement of components in this case. In FIG. 39, the cover sheet printing module and the meta information generating module and the encoding module are disposed in the business system 1001. The MFP function is disposed in the MFP 1002. The access control module, the encoding module, the decoding module, the meta document analyzing module, the document file managing module and the file storing function are disposed in the file server 1003. The encoding module, the original modification printing module and the general-purpose browser are disposed in the PC 1004.

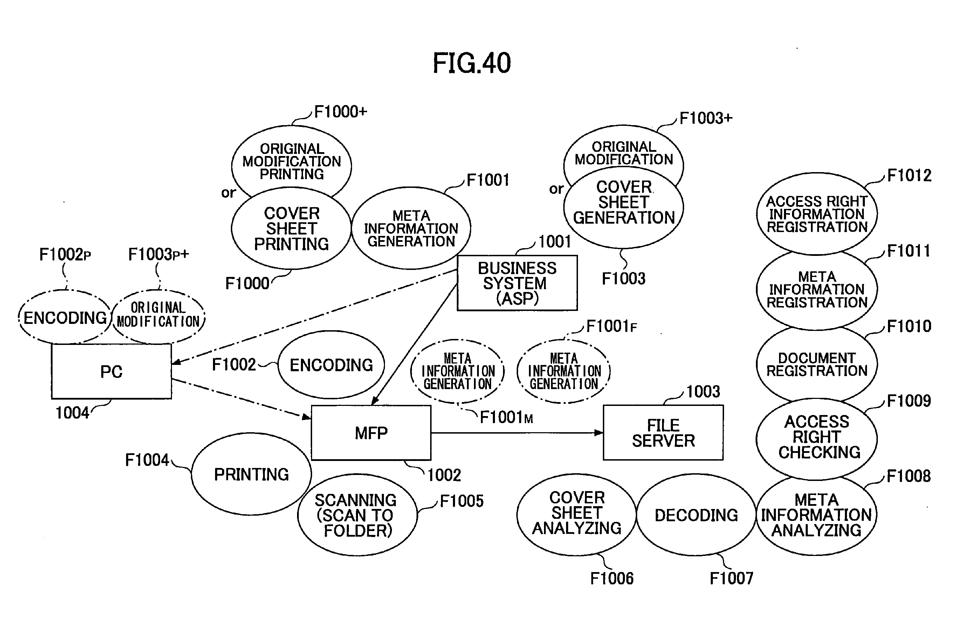

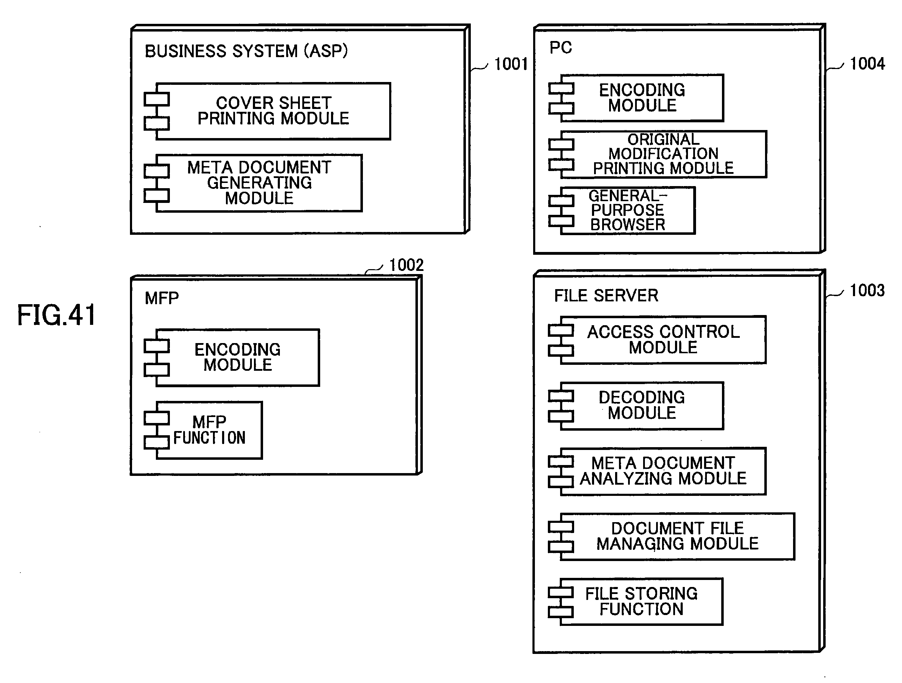

In FIG. 40, the cover sheet printing function F1000 or the original modification printing function F1000+, the meta information generation function F1001 and the cover sheet generation function F1003 or the original modification function F1003+ are disposed in the business system 1001. The encoding function F1002_{P} and the original modification function F1003_{P}+ are disposed in the PC 1004. Further, the encoding function F1002, the printing function F1004, the scanning function F1005 and the meta information generation function F1001_{M} are disposed in the MFP 1002. The cover sheet analyzing function F1006, the decoding function F1007, the meta information analyzing function F1008, the access right checking function F1009, the document registration function F1010, the meta information registration function F1011, the access right information registration function F1112 and the meta information generation function F1001_{F} are disposed in the file server 1003. FIG. 41 shows an arrangement of components in this case. In FIG. 41, the cover sheet printing module and the meta information generating module are disposed in the business system 1001. The MFP function is disposed in the MFP 1002. The access control module, the decoding module, the meta document analyzing module, the document file managing module and the file storing function are disposed in the file server 1003. The encoding module, the original modification printing module and the general-purpose browser are disposed in the PC 1004.

### <ASP scanning>

A scanned document management method according to a fourth embodiment of the present invention will now be described. In the scanned document management method according to the fourth embodiment, the present invention is applied for ASP scanning described above.

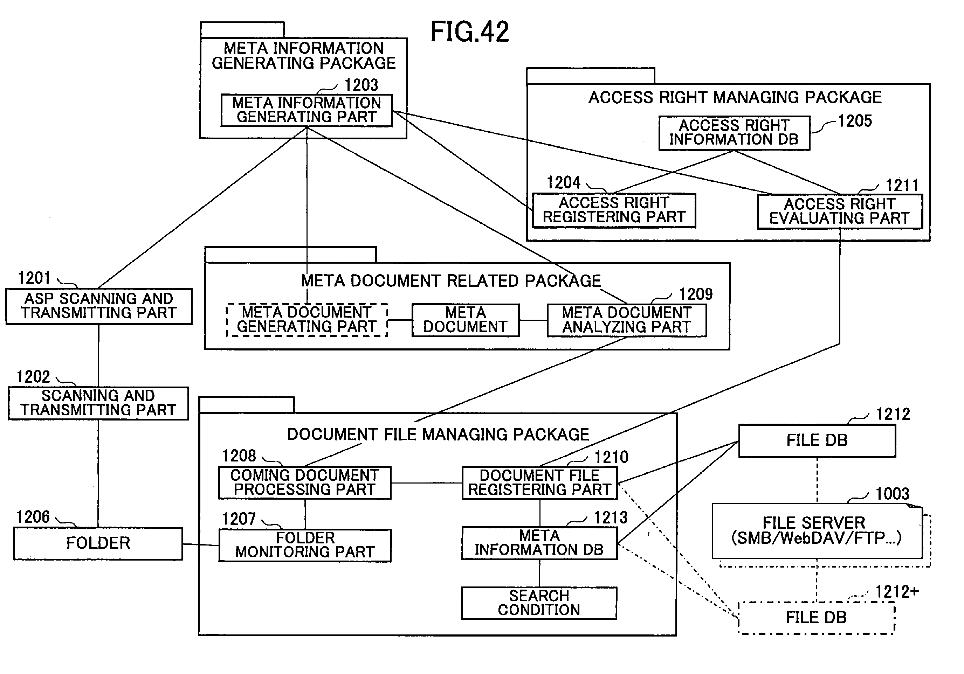

FIG. 42 shows a class diagram of the fourth embodiment.

In FIG. 42, as components of functional parts, an ASP scanning and transmitting part 1201 for ASP scanning, a scanning and transmitting part 1202 provides a function of MFP, a meta information generating part 1203 included in a meta information generating package, an access right registering part 1204 and an access right information DB 1205 included in an access right managing package, a folder 1206 to which scanned documents are delivered, a folder monitoring part 1207 and a coming document processing part 1208 included in a file managing package, a meta document analyzing part 1209 included in a meta document related package, a document file registering part 1210 included in a document file managing package, an access right evaluating part 1211 included in the access right managing package, a file DB 1212 of the file server 1003, a meta information DB 1213 of the file server 1003 included in the document file managing package, are provided.

It is noted that the document file registering part 1210 may act as a storage manager for allocating registration destinations to a plurality of file servers. In this case, a file DB 1212+ acts as another file server. As the plurality of file servers, for example, file servers operating in a LAN (Local Area Network), file servers operating in a WAN (Wide Area Network), or such (i.e., online file serves) may be used.

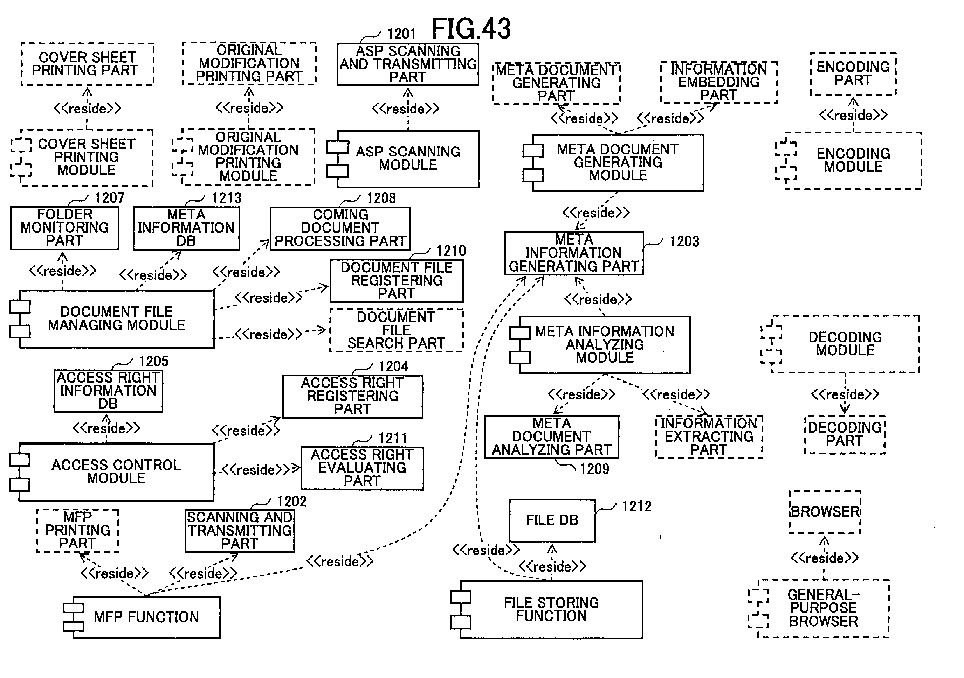

FIG. 43 shows components in the fourth embodiment applying the present invention in ASP scanning.

In FIG. 43, the ASP scanning and transmitting part 1201 belongs to an ASP scanning module, the scanning and transmitting part 1202 belongs to a MFP function, the meta information generating part 1203 belongs to a meta document generating module, a meta document analyzing module, the MFP function and a file storing function. The access right registering part 1204, the access right information DB 1205 and the access right evaluating part 1211 belong to the access control module. The folder monitoring part 1207, the coming document processing part 1208, the document file registering part 1210 and the meta information DB 1213 belong to a document file managing module. The meta document analyzing part 207 belongs to a meta document analyzing module. The file DB 1212 belongs to the file storing function.

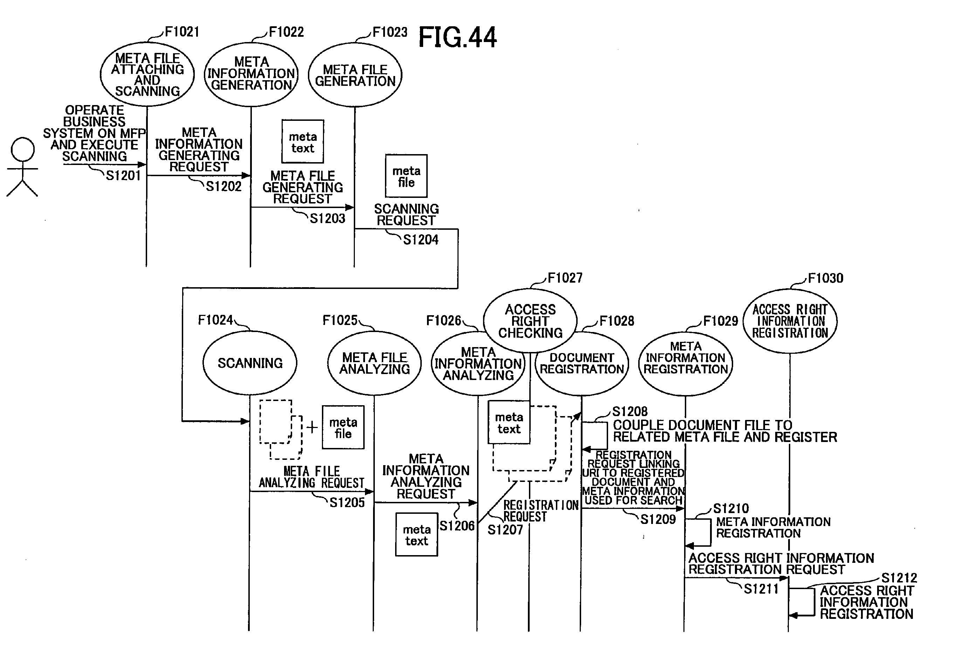

FIG. 44 shows a general configuration of processing of ASP scanning.

In FIG. 44, when execution of scanning is requested (Step S1201) to a meta file attaching and scanning function F1021 as a result of the business system 1001 being operated by a user from the MFP 1002, the meta file attaching and scanning function F1021 makes a meta information generating request to the meta information generating function F1022 (Step S1202).

The meta information generating function F1022 generates meta information (see FIGS. 32 and 32), requests the meta file generating function F1023 to generate a meta file of the meta information (Step S1203), the meta file generating function F1023 generates the meta file of the meta information and requests the scanning fruition F1024 to carry out scanning (Step S1204).

The scanning function F2024 scans a target document, and requests the meta file analyzing function F1025 to analyses the meta file, with image data obtained from the scanning of the target document and the meta file (Step S1205).

The meta file analyzing function F1025 extracts the meta file and requests the meta information analyzing function F1026 to analyze meta information of the meta file (Step S1206), and the meta information analyzing function F1026 requests the document registration function F1028 to carry out document registration via the access right checking function F1027 (Step S1207).

The document registration function F1028 couples the document file of the image data to the meta file, and carries out registration thereof (Step S1208). The document registration function F1028 requests the meta information registration function F1029 to carry out registration with a link between a URI of the registered document file of the image data and the meta information used for a search for the corresponding document file (Step S1209).

The meta information registration function F1029 registers the meta information (Step S1210), requests the access right registration function F1030 to register access right information (Step S1211), and the access right registration function F1030 registers the access right information (Step S1212).

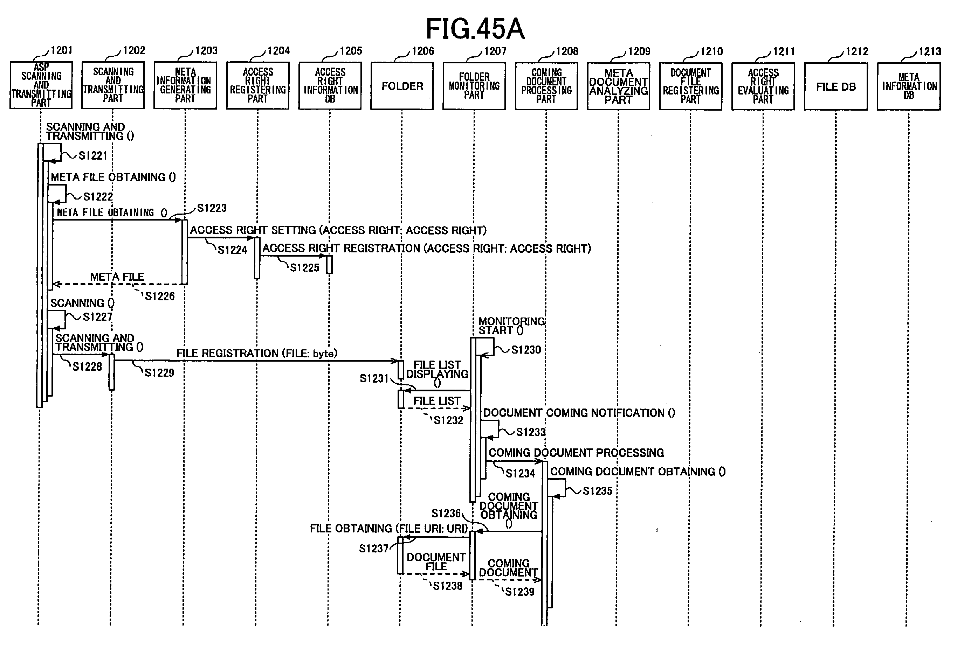

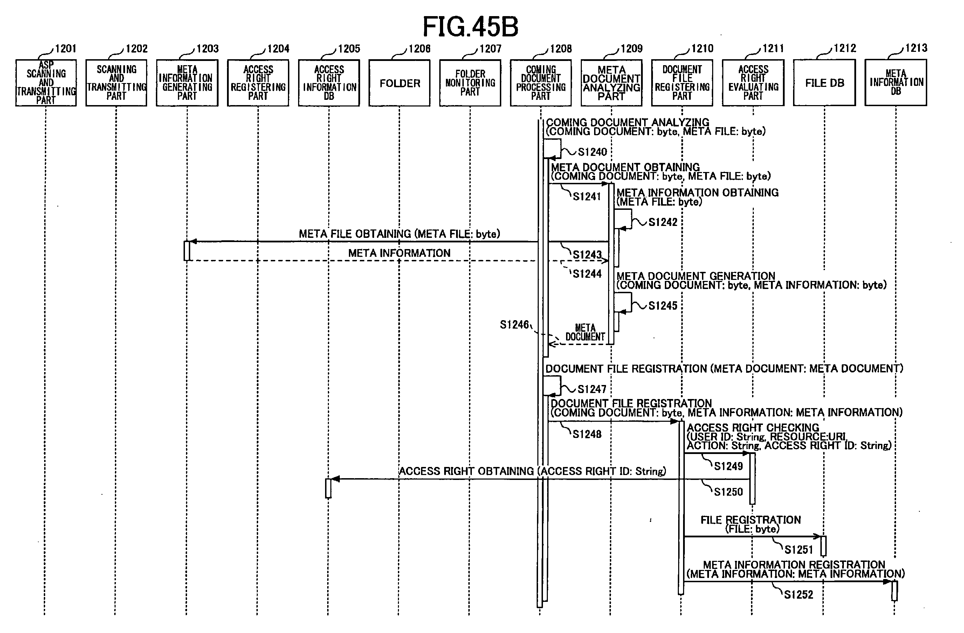

FIGS. 45A and 45B show a sequence of an example of the processing of ASP scanning in detail.

In FIGS. 45A and 45B, for starting scanning of a given document and transmitting thus-obtained document image data (Step S1211), the ASP scanning and transmitting part 1201 starts obtaining a meta file (Step S1222), requests the meta information generating part 1203 to obtain a meta file (Step S1223).

The meta information generating part 1203 requests the access right registering part 1204 to set an access right (Step S1224), the access right registering part 1204 registers an access right in the access right information DB 1205 (Step S1225), and thus, a thus-obtained access right ID is returned to the meta information generating part 1203 via the access right registering part 1204.

The meta information generating part 1203 then returns meta information including the access right ID, to the ASP scanning and transmitting part 1201 (Step S1226).

Next, the ASP scanning and transmitting part 1201 starts scanning of the given document (Step S1227), requests the scanning and transmitting part 1202 to actually carry out scanning of the given document and transmitting thus-obtained document image data (Step S1228), and the scanning and transmitting part 1202 registers a document file of thus obtained document image data together with the a meta file of the meta information including the access right ID, in the folder 1206 (Step S1229).

The folder monitoring part 1207 starts monitoring the folder 1206 (Step S1230), requests the folder 1206 to display a list of files (Step S1231), and obtains the file list (Step S1232).

Next, the folder monitoring part 1207 starts document coming notification (Step S1233), requests the coming document processing part 1208 to carry out document coming processing (Step S1234).

The coming document processing part 1208 starts obtaining a coming document, i.e., the document file of the document image data and the meta file of the meta information from the folder 1206 (Step S1235), requests the folder monitoring part 1207 to obtain the coming document (Step S1236), the folder monitoring part 1207 requests the folder 1206 to obtain the files of the coming document (Step S1237), the folder 1206 returns the files of the coming document to the folder monitoring part 1207 (Step S1238), and the folder monitoring part 1207 returns the coming document (the document file and the meta file) to the coming document processing part 1208 (Step S1239).

Next, the coming document processing part 1208 starts analyzing of the coming document (Step S1240), and requests the meta document analyzing part 1209 to obtain a meta document from the meta file (Step S1241).

Next, the meta document analyzing part 1209 starts obtaining the meta information from the meta file (Step S1242), requests the meta information generating part 1203 to actually obtain the meta information from the meta file (Step S1243), and obtains the meta information from the meta information generating part 1203 (Step S1244).

Next, the meta document analyzing part 1209 starts generating of the meta document from the meta information as well as the above-mentioned coming document (i.e., the document file) (Step S1245), and returns the thus-obtained meta document to the coming document processing part 1208 (Step S1246).

The coming document processing part 1208 starts registration of the document file (Step S1247), requests the document file registering part 1210 to register the document file of the coming document obtained from the meta document (Step S1248), the document file registering part 1210 requests the access right evaluating part 1211 to check an access right (Step S1249), the access right evaluating part 1211 obtains an access right from the access right information DB 1205 and carries out access right checking (i.e., by determining whether or not the proper access right ID is extracted from the meta information, for example) (Step S1250).

Next, the document file registering part 1210 registers the document file in the file DB 1212 (Step S1251), and also, the document file registering part 1210 registers the meta information obtained from the meta document, in the meta information DB 1213 (Step S1252).

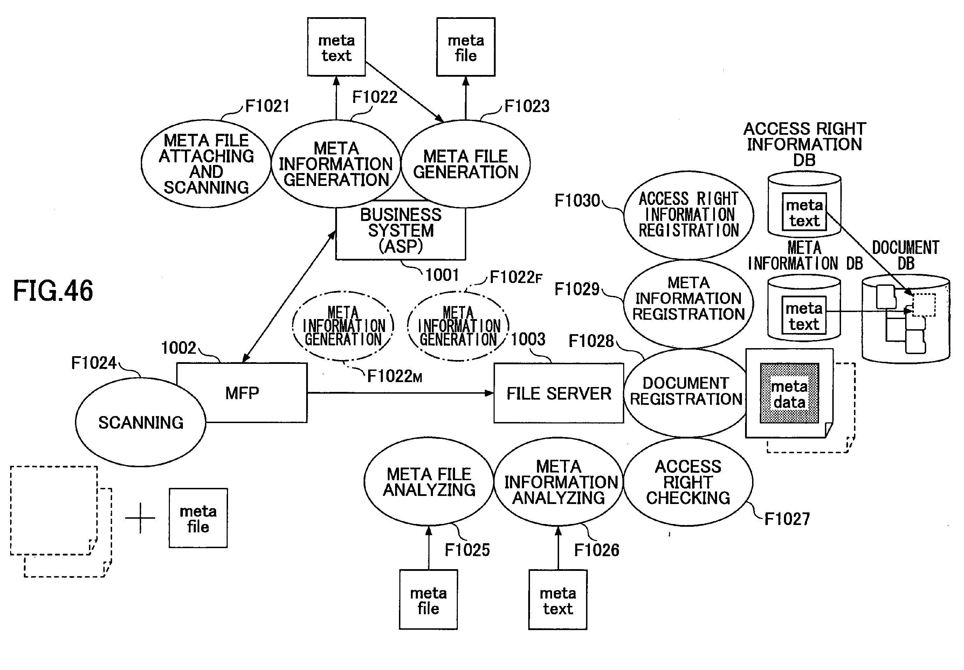

FIG. 46 shows a specific example of an arrangement of functional parts for ASP scanning.

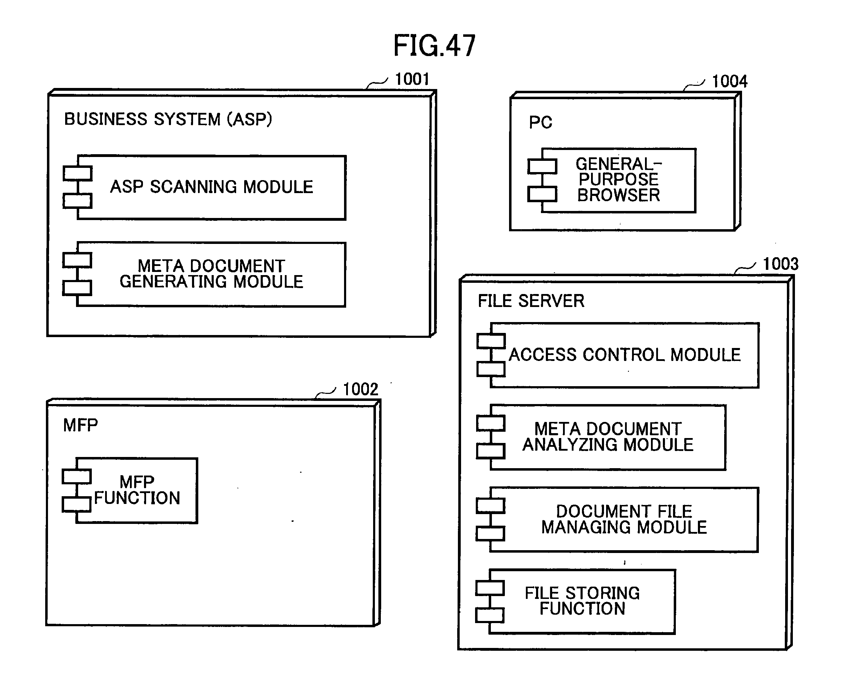

In FIG. 46, the meta file attaching and scanning function F1021, the meta information generation function F1022 and the meta file generation function F1023 are disposed in the business system 1001. The scanning function F1024 and the meta information generation function F1022_{M} are disposed in the MFP 1002. The meta file analyzing function F1025, the meta information analyzing function F1026, the access right checking function F1027, the document registration function F1028, the meta information registration function F1029 and the meta information generation function F1022_{F} are disposed in the file server 1003. FIG. 47 shows a component arrangement in this case. In FIG. 47, in the business system 1001, the ASP scanning module and the meta document generation module are disposed. In the MFP 1002, an MFP function is disposed. In the file server 1003, the access right control module, the meta document analyzing module, the document file managing module and the file storing function are disposed. In the PC 4, a general-purpose browser is disposed.

### <Search>

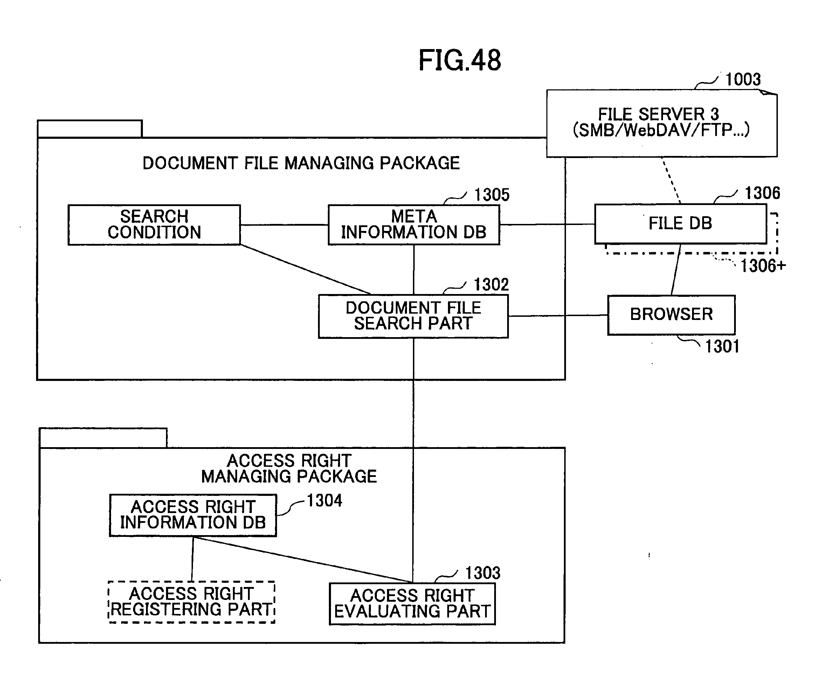

FIG. 48 shows a class diagram for search in common for the case of MFP scanning (i.e., the third embodiment) and the case of ASP scanning (i.e., the fourth embodiment).

In FIG. 48, as components of functional parts, a browser 1301 provided in the PC 1004, a document file search part 1302 included in the document file managing package, an access right evaluating part 1303 and an access right information DB 1304 included in the access right managing package, a meta information DB 1305 included in the document file managing package and a file DB 1306 of the file server 1003 are provided. It is noted that, in the case where a plurality of file servers are used as registration destinations, and a file DB 1306+ acts as another file server.

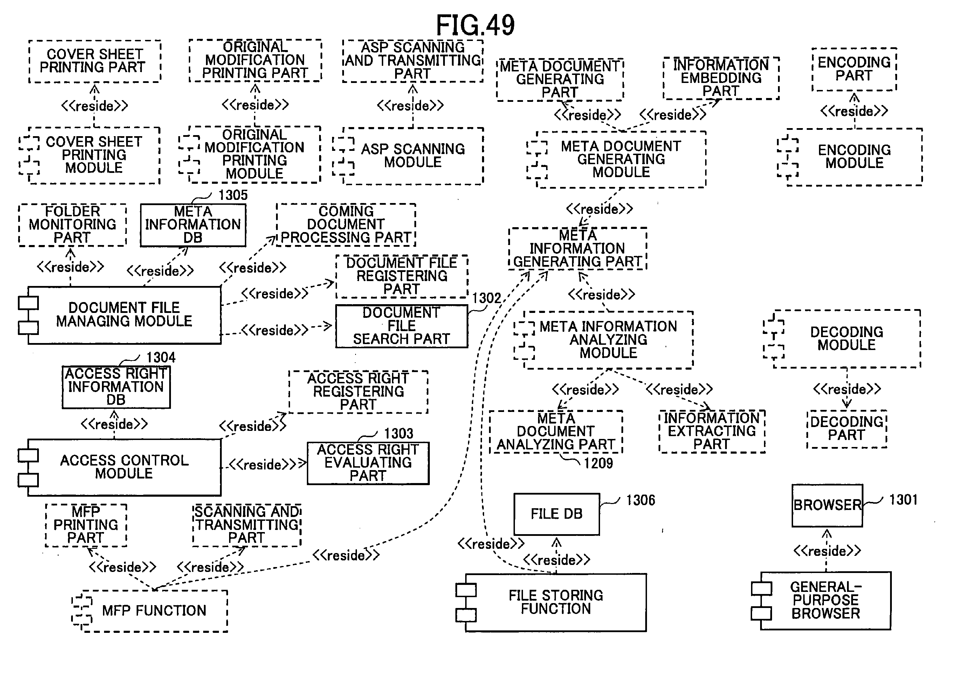

FIG. 49 shows components used for search in common for both cases of MFP scanning and ASP scanning.

In FIG. 49, the browser 1301 belongs to the general-purpose browser, the document file search part 1302 and the meta information DB 1305 belong to the document file managing module, the access right evaluating part 1303 and the access right information DB 1304 belong to the access control module and the file DB 1306 belongs to the file storing function.

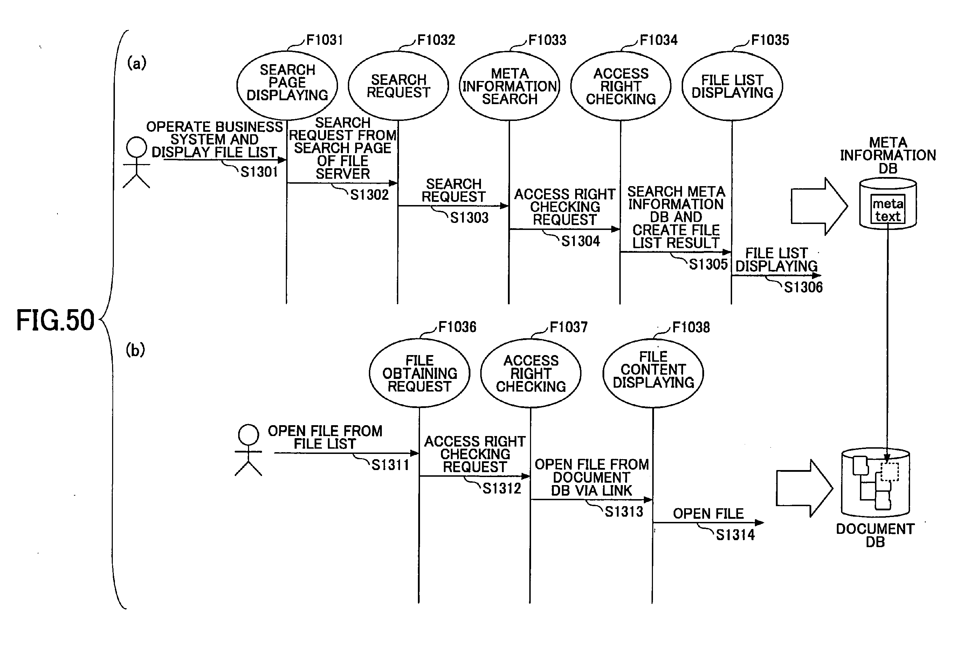

FIG. 50 shows a general configuration of processing of search. FIG. 50 (a) shows processing of search, and FIG. 50 (b) shows processing of opening a file from a file list obtained from the search.

In FIG. 50 (a), when the business system 1001 is operated from the PC 1004 by a user, and a search page displaying function F1031 is requested to display a file list (Step S1301), the search page displaying function F1031 requests a search request function F1032 to carry out a search resulting from a corresponding request by the user input from a search page of the file server 1003 (Step S1302).

The search request function F1032 requests a meta information search function F1033 to carry out the search (Step S1303), the meta information search function F1033 searches the meta information DB, and requests the access right checking function F1034 to check an access right for a file hit from the search from the meta information DB (Step S1304).

The meta information search function F1033 creates a file list of files which are allowed to access as a result of the checking the access right, transfers the file list to a file list displaying function F1034 (Step S1305), and the file list displaying function F1034 displays the file list to the user (Step S1306).

In FIG. 50 (b), when a request for opening a desired file selected by the user from the file list is made to a file obtaining request function F1036 (Step S1311), the file obtaining request function F1036 requests the access right checking function F1034 to check an access right therefor (Step S1312).

When there occurs no problem in the checking of the access right, the file obtaining request function F1036 requests a file content displaying function F1038 to open the file from the document DB based on a given link (Step S1313), and the file content displaying function F1038 opens the corresponding file (Step S1314).

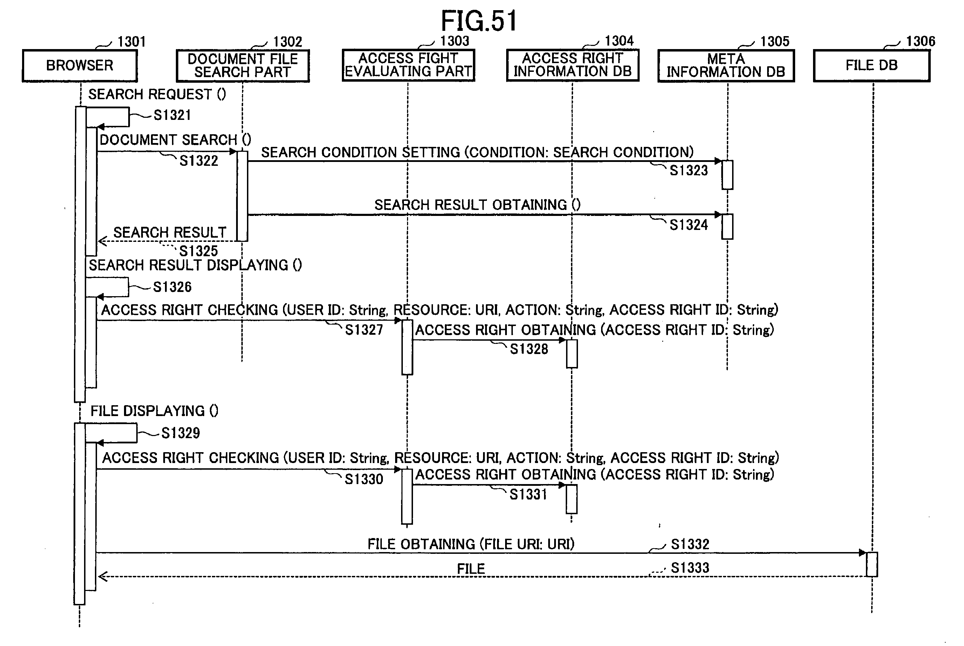

FIG. 51 shows a sequence of an example of the processing of search in detail.

In FIG. 51, when the browser 1301 starts a search request (Step S1321), it requests the document file search part 1302 to carry out a document search (Step S1322).

The document file search part 1302 sets a search condition in the meta information DB 1305 (Step S1323), thus obtains a search result from the meta information DB 1305 (Step S1324), the document file search part 1302 returns the search result to the browser 1301 (Step S1325).

When starting displaying of the search result (Step S1326), the browser 1301 requests the access right evaluating part 1303 to check an access right therefor (Step S1327), the access right evaluating part 1303 thus obtains an access right from the access right information DB 1304 (Step S1328), and, as a result, the browser 1301 displays the search result (Step S1329).

Next, when the browser 1301 starts file displaying (Step S1329), it requests the access right evaluating part 1303 to check an access right therefor (Step S1330), the access right evaluating part 1303 thus obtains an access right from the access right information DB 1304 (Step S1331), the browser 1301 as a result requests the file DB 304 to obtain a corresponding file thus allowed to access as a result of the access right checking (Step S1332), obtains the file from the file DB 1306, and displays it (Step S1333).

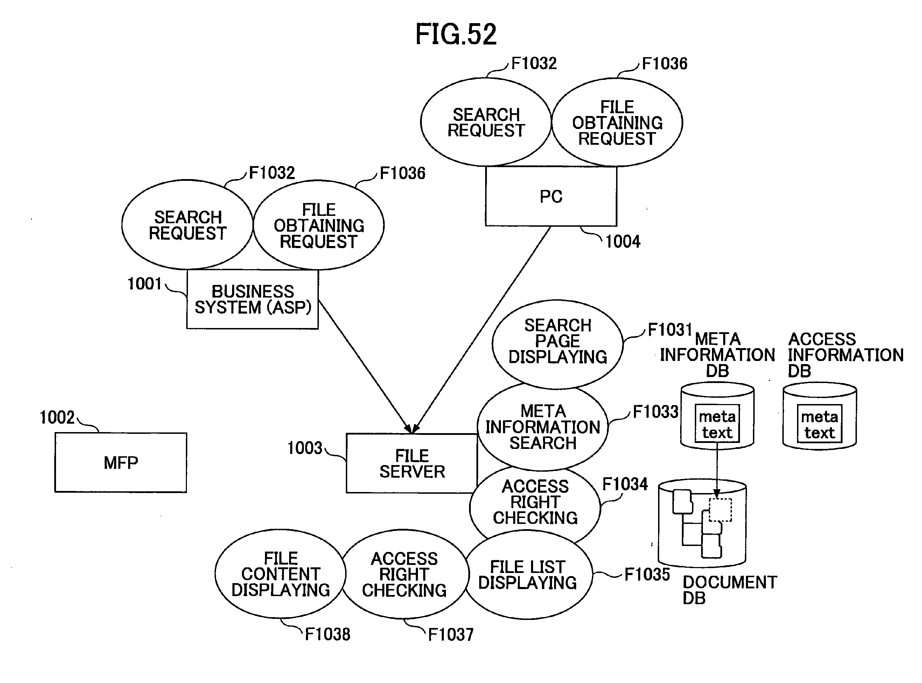

FIG. 52 shows an example of a specific arrangement of the functional parts used for the search for both cases of MFP scanning and ASP scanning.

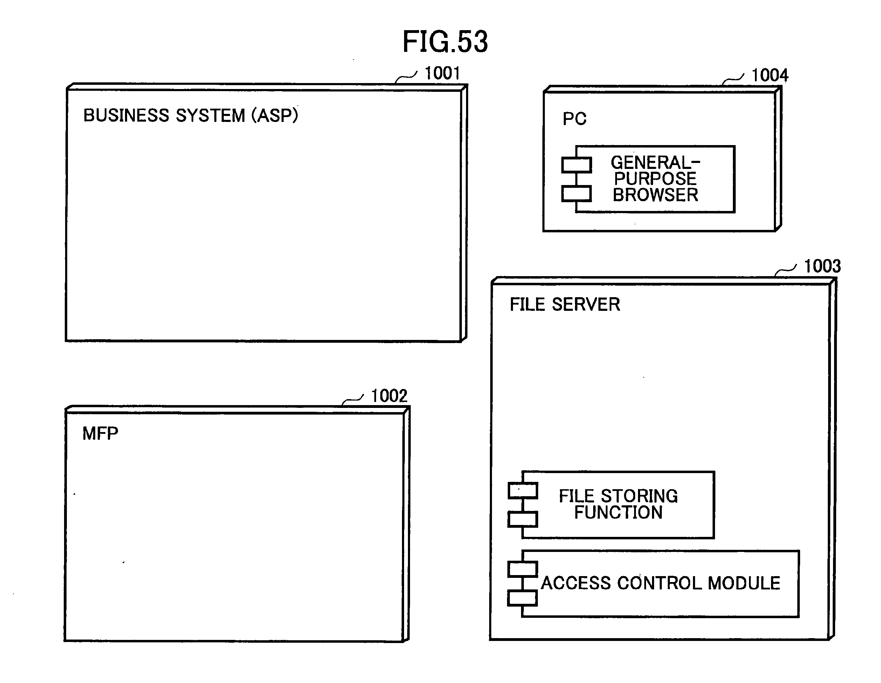

In FIG. 52, the search request function F1032 and the file obtaining function F135 are disposed in the PC 1004. In the business system 1001, the search request function F1032 and the file obtaining request function F1035 are disposed. In the file server 1003, the search page displaying function F1031, the meta information search function F1033, the access right checking function F1034, the file list displaying function F1035, the access right checking function F1037 and the file content displaying function F1038 are disposed. FIG. 53 shows a component arrangement in this case. In FIG. 53, the file storing function and the access control module are disposed in the file server 1003. In the PC 1004, the general-purpose browser is disposed. Since the file server 1003 provides a search service, no special functions are required for the business system 1001, the MFP 1002 and the PC 1004.

### <Summary>

As described above, according to the second mode for carrying out the present invention, access control is carried out based on the access control information included in the meta information corresponding to the document stored by the file server 1003. As a result, it is possible to improve access right control of the file server 1003, and to improve the security, in the scanned document management system in which the MFP 1002, the business system 1001 and the file server 1003 are associated with each other.

### <Third mode for carrying out the present invention>

A third mode for carrying out the present invention (i.e., a fifth embodiment of the present invention) will now be described.

A fifth embodiment of the present invention will now be described.

A scanned document management system in the fifth embodiment of the present invention corresponds to the scanned document management system in the related art described above with reference to FIGS. 1 and 2, includes a business system 2001, an MFP 2002, a file server 2003 and a PC 2004, corresponding to the business system 11, the MFP 12, the file server 13 and the PC 14, shown in FIGS. 1 and 2, respectively, and includes improvements described below.

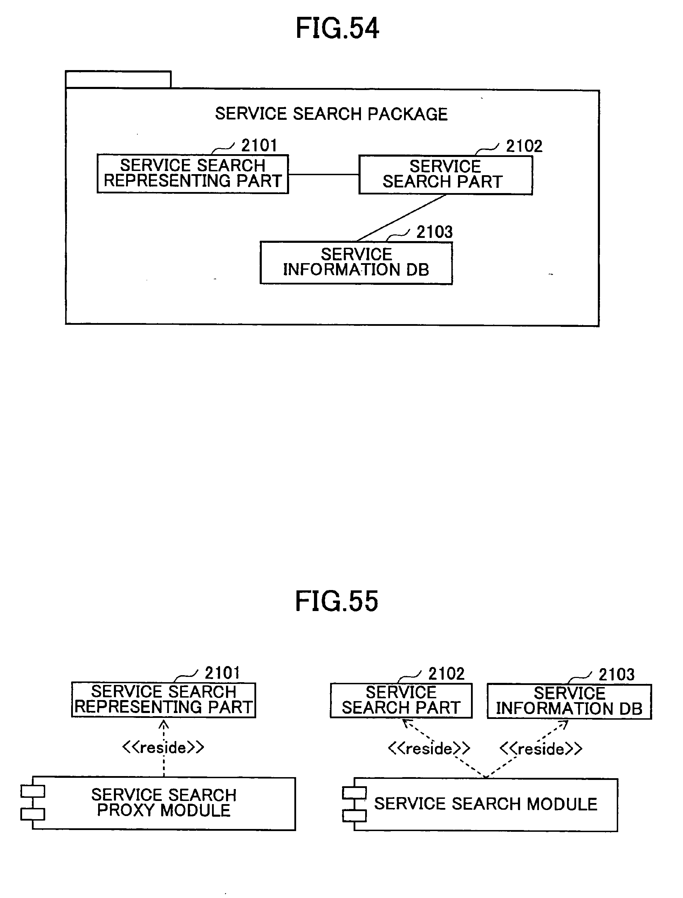

FIG. 54 shows a class diagram of the fifth embodiment of the present invention.

In FIG. 54, as components of functional parts, a service search representing part 2101, a service search part 2102 and a service information DB 2103, included in a service search package, are provided. A specific arrangement of the respective parts will be described later, the service search representing part 2101 is provided in each of a business system 2001 and an MFP 2002, and the service search part 2102 and the service information DB 2103 are provided in a registry server 2005.

FIG. 55 shows a component diagram of the fifth embodiment.

In FIG. 55, the service search representing part 2101 belongs to a service search proxy module, and the service search part 2102 and the service information DB 2103 belong to a service search module.

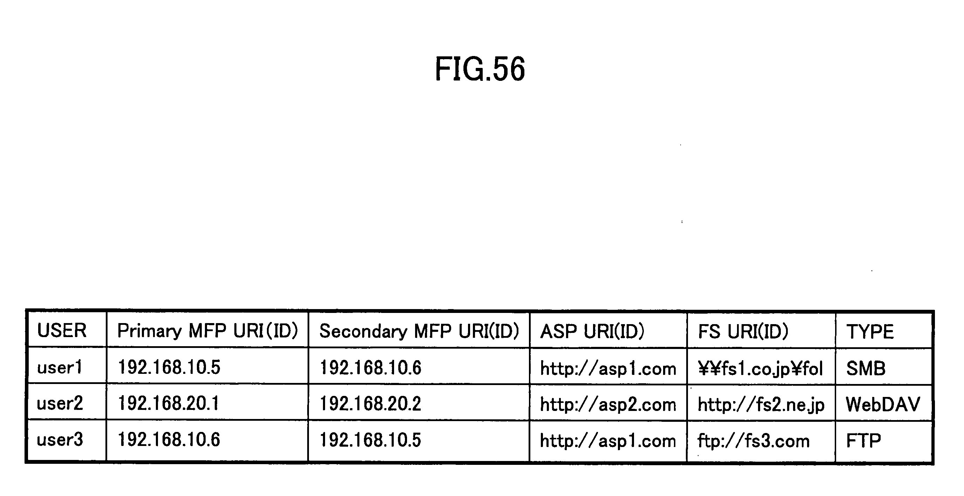

FIG. 56 shows an example of the contents stored in the service information DB. As shown in FIG. 56, a 'user' field for identifying a user, a 'Primary MFP URI (ID)' field indicating a URI of a primary MFP for each user, a 'Secondary MFP URI (ID)' field indicating an URI of a secondary MFP for each user, an 'ASP URI (ID)' field indicating an URI of the business system, a 'FS URI (ID)' indicating a URI of the file server, and a 'TYPE' protocol indicating a protocol of the file server, are included.

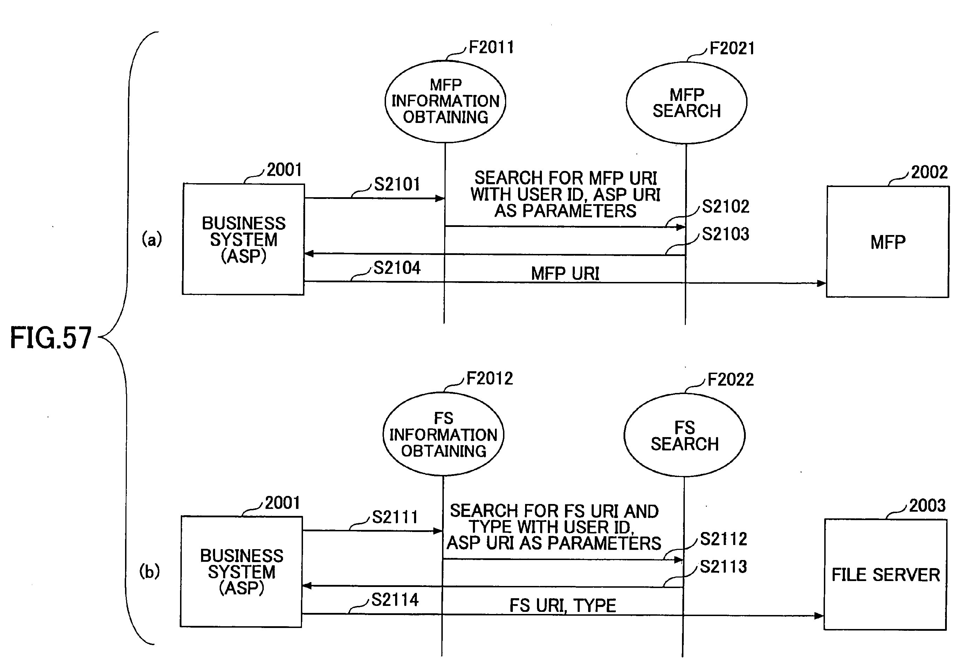

FIG. 57 shows a general configuration of processing of the fifth embodiment. FIG. 57 (a) shows processing of identifying the MFP 2002 from the business system 2001, and FIG. 57 (b) shows processing of identifying the file server 2003 from the business system 2001.

In FIG. 57 (a), when the business system 2001 requests an MFP information obtaining function F2011 (corresponding to the service search representing part 2101) of the business system 2001 itself to search for a MFP URI, with a user ID and a ASP URI as parameters for the search (Step S2101), the MFP information obtaining function F2011 transmits the search request to an MFP search function F2021 (corresponding to the service search part 2102) of the registry server 2005 (Step S2102).

In response thereto, the MFP search function F2021 searches the service information DB (2103), and transmits a search result thereof to the business system 2001 (Step S2103).

The business system 2001 accesses the MFP 2002 based on the thus-obtained MFP URI (Step S2104).

In FIG. 57 (b), when the business system 2001 requests an FS information obtaining function F2012 (corresponding to the service search representing part 2101) of the business system 2001 itself to search for a FS URI and a TYPE, with a user ID and a ASP URI as parameters for the search (Step S2111), the FS information obtaining function F2012 transmits the search request to an FS search function F2022 (corresponding to the service search part 2102) of the registry server 2005 (Step S2112).

In response thereto, the FS search function F2022 searches the service information DB (2103), and transmits a search result thereof to the business system 2001 (Step S2113).

The business system 2001 accesses the file server 2003 based on the thus-obtained FS URI and TYPE (Step S2114).

The cases of identifying the MFP 2002 and the file server 2003 from the business system 2001 have been thus described. The same manner may also be applied for cases of identifying the business system 2001 and the file server 2003 from the MFP 2002.

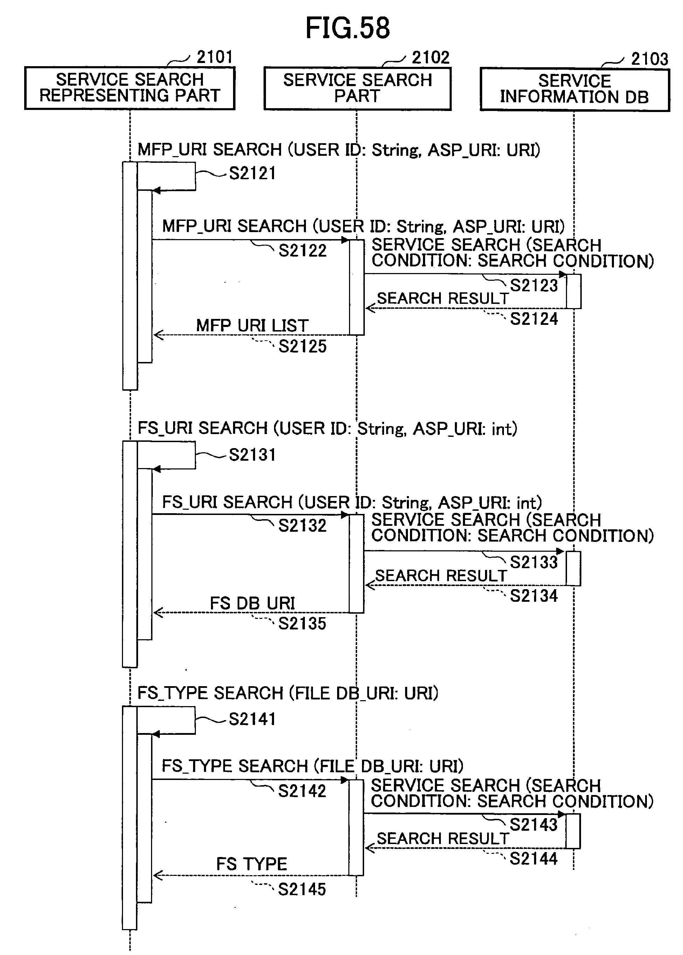

FIG. 58 shows a sequence of an example of the processing of the fifth embodiment in detail.

In FIG. 58, when the service search representing part 2101 starts a search for an MFP URI (Step S2121), it requests the service search part 2102 to search for the MFP URI (Step S2122), and the service search part 2102 requests the service information DB 2103 to search for a service (Step S2123).

When a search result thereof is returned to the service search part 2102 from the service information DB 2103 (Step S2124), the service search part 2102 returns an MFP URI list included in the search result to the service search representing part 2101 (Step S2125).

Further, when the service search representing part 2101 starts a search for an FS URI (Step S2131), it requests the service search part 2102 to search for the FS URI (Step S2132), and the service search part 2102 requests the service information DB 2103 to search for a service (Step S2133).

When a search result thereof is returned to the service search part 2102 from the service information DB 2103 (Step S2134), the service search part 2102 returns the FS URI included in the search result to the service search representing part 2101 (Step S2135).

Further, when the service search representing part 2101 starts a search for an FS TYPE (Step S2141), it requests the service search part 2102 to search for the FS TYPE (Step S2142), and the service search part 2102 requests the service information DB 2103 to search for a service (Step S2143).

When a search result thereof is returned to the service search part 2102 from the service information DB 2103 (Step S2144), the service search part 2102 returns the FS TYPE included in the search result to the service search representing part 2101 (Step S2145).

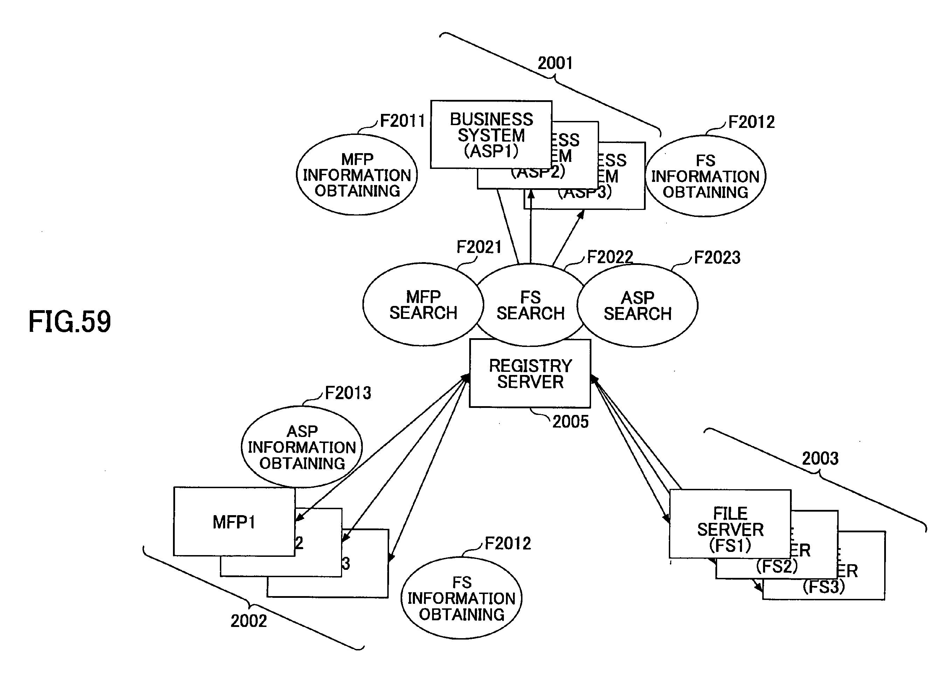

FIG. 59 shows an example of a specific arrangement of the function part.

In FIG. 59, in each of the respective business systems 2001, the MFP information obtaining function F2011 and the FS information obtaining function F2012 are disposed, and, in each of the respective MFPs 2002, the FS information obtaining function F2012 and the ASP information obtaining function F2013 are disposed.

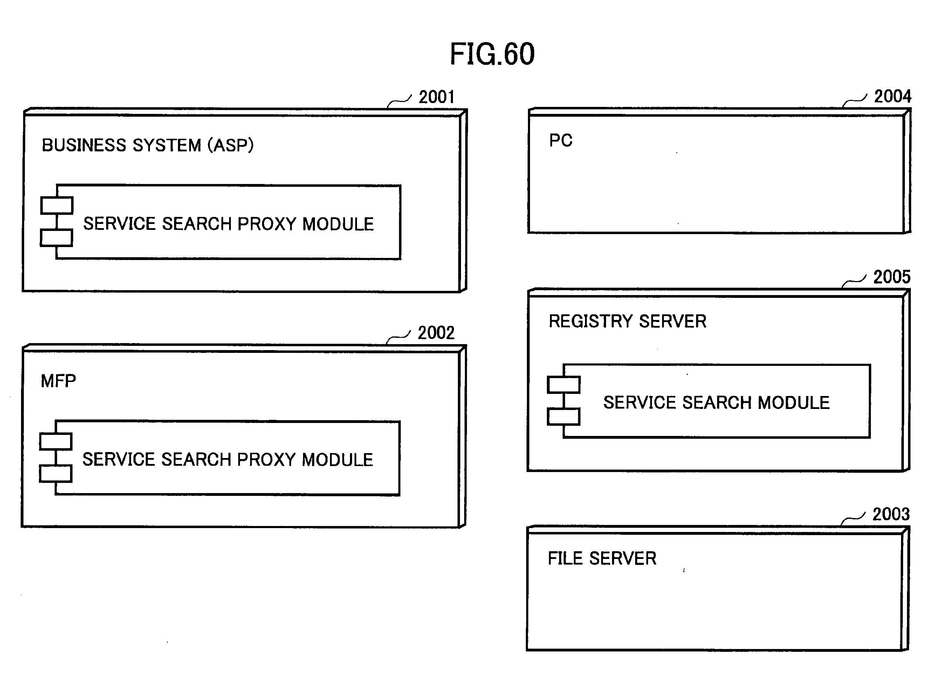

FIG. 60 shows a component diagram for this case. In FIG. 60, in the business system 2001, the service search proxy module is disposed. In the MFP 2002, the service search proxy module is disposed. In the registry server 2005, the service search module is disposed.

As described above, according to the third mode for carrying out the present invention, in the scanned document management system in which the MFP 2002, the business system 2001 and the file server 2003 are associated together, the registry service is used to obtain information required for achieving the association thereamong. Thereby, mutual relationship thereamong may become moderately estranged so that it is possible to provide necessary flexibility for a case of extension, replacement or such of the equipment of the system.

Further, the present invention is not limited to the above-described embodiments, and variations and modifications may be made without departing from the basic concept of the present invention claimed below.

The present application is based on Japanese Priority Applications Nos. 2006-204911, 2006-204912, 2006-204913, 2007-170859, 2007-170860 and 2007-170861, filed on July 27, 2006, July 27, 2006, July 27, 2006, June 28, 2007, June 28, 2007 and June 28, 2007, respectively, the entire contents of which are hereby incorporated herein by reference.

## Claims

1. A scanned document management method for registering in a file server an image file obtained from scanning a document with an image processing apparatus, under the control of a data processing system which carries out management of forms or the like, the method comprising:
generating based at least on information obtained from the data processing system, meta information including information with which the document can be identified in a subsequent search and which is not specific to the implementation of the data processing system and the file server;
registering, in the file server, the meta information in association with the image file of the scanned document; and
submitting, based on the meta information, the associated image file of the document, registered in the file server, in response to a search request given by a client other than the data processing system.

2. A scanned document management method for registering in a file server an image file obtained from scanning a document with an image processing apparatus, under the control of a data processing system which carries out management of forms or the like, the method comprising:
generating meta information including information for identifying, in a subsequent search, the image file of the document, as well as control information describing an access condition for accessing the document;
carrying out an access right checking operation based on the access control information of the meta information when registering, in the file server, the meta information in association with the image file of the scanned document; and
submitting, in response to a search request for the image file of the document, the associated image file registered in the file server, after carrying out an access right checking operation based on the access control information of the meta information.

3. A scanned document management method according to claim 1 or 2, wherein:
said data processing system generates, before executing the scanning, a paper cover sheet in which the meta information is embedded, and is scanned together with the document.

4. A scanned document management method according to claim 1, 2 or 3, wherein:
said data processing system embeds the meta information when printing out the document to be scanned.

5. A scanned document management method according to claim 1, 2, 3 or 4, wherein:
a terminal which is connected with the data processing system embeds the meta information when printing out the document to be scanned.

6. A scanned document management method according to claim 1, 2, 3, 4 or 5, wherein:
said data processing system generates, in a case of scanning the document with the image processing apparatus, the meta information, which is transmitted together with the image file.

7. A scanned document management method as claimed in any one of claims 1-6, wherein:
authentication information required when accessing the file server is included in the meta information.

8. A scanned document management system for registering in a file server an image file obtained from scanning a document with an image processing apparatus, under the control of a data processing system which carries out management of forms or the like, the system comprising:
a meta information generating part configured to generate, based at least on information obtained from the data processing system, meta information including information, with which the document can be identified afterward, and which is not specific to the implementation of the data processing system and the file server;
a meta information registering part configured to register, in the file server, the meta information in association with the image file of the scanned document; and
a file search part configured to submit, based on the meta information, the associated image file of the document, registered in the file server, in response to a search request given by a terminal other than the data processing system.

9. A scanned document management system for registering in a file server an image file obtained from scanning a document with an image processing apparatus, under the control of a data processing system which carries out management of forms or the like, comprising:
a meta information generating part configured to generate meta information including information for identifying, in a subsequent search the image file of the document, as well as control information describing an access condition for accessing the document;
a meta information registering part configured to register, in the file server, the meta information in association with the image file of the scanned document;
a file search part configured to submit, in response to a search request for the image file of the document, the associated image file registered in the file server, based on the meta information, and
an access right checking part configured to carry out, in response to the registration of the image file and the meta information and in response to the search request, an access right checking operation based on the access control information of the meta information.

10. A scanned document management system according to claim 8 or 9, wherein:
said data processing system comprises a part configured to generate, before executing the scanning, a paper cover sheet in which the meta information is embedded and which is scanned together with the document.

11. A scanned document management system according to claim 8, 9 or 10, wherein:
said data processing system comprises a part configured to embed the meta information when printing out the document to be scanned.

12. A scanned document management system according to claim 8, 9, 10 or 11, wherein:
a terminal which is connected with the data processing system comprises a part configured to embed the meta information when printing out the document to be scanned.

13. A scanned document management system according to claim 8, 9, 10 or 11, wherein:
said data processing system comprises a part configured to generate, in a case of scanning the document with the image processing apparatus, the meta information, which is transmitted together with the image file.

14. A scanned document management system according to any one of claims 8-13, wherein:
the data processing system comprises authentication information required when accessing the file server, in the meta information.

15. A scanned document management method for registering in a file server an image file obtained from scanning a document with an image processing apparatus, under the control of a data processing system which carries out management of forms or the like, the method comprising:
managing, in a service information DB, information of available ones of the image processing apparatus, the data processing system and the file server; and
responding to a request from the data processing system or the image processing apparatus to provide information required for accessing the available ones of the image processing apparatus, the data processing system and the file server.

16. A scanned document management method according to claim 15, wherein:
said service information DB manages a URL of the image processing apparatus, a URL of the data processing system and a URL and a protocol type of the file server, for a user.

17. A scanned document management method according to claim 16, wherein:
the URL of the image processing apparatus or the URL and the protocol type of the file server are provided in response to a request from the data processing system.

18. A scanned document management method according to claim 16 or 17, wherein:
the URL of the data processing system or the URL and the protocol type of the file server are provided in response to a request from the image processing apparatus.

19. A scanned document management method according to claim 15, 16, 17, or 18, wherein:
said service information DB is held by a registry server.

20. A scanned document management system for registering in a file server an image file obtained from scanning a document with an image processing apparatus, under the control of a data processing system which carries out management of forms or the like, the system comprising:
a service information DB managing information of available ones of the image processing apparatus, the data processing system and the file server; and
a responding part configured to respond to a request from the data processing system or the image processing apparatus to provide information required for accessing the available ones of the image processing apparatus, the data processing system and the file server.

21. A scanned document management system according to claim 20, wherein:
said service information DB manages a URL of the image processing apparatus, a URL of the data processing system and a URL of a protocol type of the file server, for a user.

22. A scanned document management system according to claim 21, wherein:
said responding part provides the URL of the image processing apparatus or the URL and the protocol type of the file server in response to a request from the data processing system.

23. A scanned document management system according to claim 21 or 22, wherein:
said responding part provides the URL of the data processing system or the URL and the protocol type of the file server in response to a request from the image processing apparatus.

24. A scanned document management system according to claim 20, 21, 22 or 23, wherein:
a registry server holding said service information DB is provided.

25. A computer program comprising program code means that, when executed by a computer system, instruct the computer system to effect a method according to any one of claims 1 to 7 or 15 to 19.
